# EUROPEAN PATENT SPECIFICATION

(11) **EP 1 421 785 B1**
(45) Date of publication and mention of the grant of the patent: **07.10.2009**
(21) Application number: 02750416.6
(22) Date of filing: 06.08.2002
(51) Int. Cl.: H04N 5/445, H04N 7/173

(54) **INTERACTIVE PROGRAM GUIDE CONFIGURATION SYSTEM**
INTERAKTIVES PROGRAMMZEITSCHRIFTKONFIGURATIONSSYSTEM
SYSTEME DE CONFIGURATION DE GUIDE DE PROGRAMME INTERACTIF

(30) Priority: 07.08.2001 US 924111
(43) Date of publication of application: 26.05.2004
(73) Proprietor: SCIENTIFIC-ATLANTA, INC., Lawrenceville, GA 30044 (US)
(72) Inventor: GAUL, Michael, A., Lawrenceville, GA 30045 (US); JERDING, Dean, F., Roswell, GA 30076 (US)
(74) Representative: Balsters, Robert
(86) International application number: PCT/US2002/024704
(87) International publication number: WO 2003/014873

(56) References cited:
- WO-A-00/40017
- US-A- 5 493 638
- US-A- 5 886 690
- US-A- 5 978 043
- US-B1- 6 172 674

## Description

### FIELD OF THE INVENTION

This invention relates in general to television systems, and more particularly, to the field of electronic program guides.

### BACKGROUND OF THE INVENTION

Cable television systems are now capable of providing many services in addition to analog broadcast video. In implementing enhanced programming, the home communication terminal ("HCT"), otherwise known as the settop box, has become an important computing device for accessing various video services. In addition to supporting traditional analog broadcast video functionality, digital HCTs (or "DHCTs") now also support an increasing number of two-way digital services such as video-on-demand.

A DHCT is typically connected to a cable or satellite television network and includes hardware and software necessary to provide various services and functionality. Preferably, some of the software executed by a DHCT is downloaded and/or updated via the cable television network. Each DHCT also typically includes a processor, communication components and memory, and is connected to a television or other display device, such as a personal computer. While many conventional DHCTs are stand-alone devices that are externally connected to a television, a DHCT and/or its functionality may be integrated into a television or personal computer, as will be appreciated by those of ordinary skill in the art.

One of the services that can be provided by a DHCT is an electronic program guide (EPG) that presents television program information arranged by time and channel. The program guide can, for instance, automatically scroll through a listing of available television programs and corresponding television channels. Many cable system operators include one or more dedicated channels that scroll through the channel list displaying the programs that not only are currently on, but also are scheduled to be on in the future. These types of passive displays do not rely on a terminal for presentation of the programming data and also lack the interactive functionality of permitting a subscriber to scroll to a desired channel for a desired time. For example, the subscriber typically must view the programming information as it scrolls on the display and wait for either the desired channel and/or the desired time to search for the program that may be available for viewing.

With the advent of one type of EPG, an interactive program guide (IPG), viewers (also referred to as "subscribers" or "users") can interactively scan program information, such as by time and channel while watching a television channel. However, many television systems can provide hundreds or even thousands of channels. In such systems, locating desired television programs can require many keystrokes by the viewer and can consume significant amounts of time. Furthermore, different users may have varying preferences as to the amount, type, and/or format of information that is presented via an IPG screen. As a result, there is a need for an IPG system that is more convenient to use and that is more appealing to users.

Document US 6,172,674 discloses a system for providing interactive media services. This system comprises a memory for storing IPG configuration data that is used to determine an IPG screen characteristic. The configuration data may be modified when a user requests a change in the screen characteristics.

### Summary of the invention

In view of the above-mentioned problems of the background art, the system for providing interactive media services and the method for configuring a user interface are as defined in the appended claims.

### BRIEF DESCRIPTION OF THE DRAWINGS

The invention can be better understood with reference to the following drawings. The components in the drawings are not necessarily drawn to scale, emphasis instead being placed upon clearly illustrating the principles of the present invention. In the drawings, like reference numerals designate corresponding parts throughout the several views.
FIG. 1 is a block diagram depicting a non-limiting example of a DHCT that is coupled to a headend and to a television.
FIG. 2 illustrates a non-limiting example of a remote control device that is used to provide user input to the DHCT illustrated in FIG 1.
FIG. 3 depicts a non-limiting example of an IPG screen that illustrates an initial guide arrangement in a time format that the DHCT illustrated in FIG. 1 presents to a user in response to user input.
FIG. 4 is a diagram illustrating a non-limiting example of an IPG icon selection screen that is presented to a user in response to the activation of the C button on the remote control device while being presented with the IPG screen depicted in FIG. 3.
FIG. 5 depicts a non-limiting example of an IPG icon selection screen that is presented to a user after the user selects a tool icon and an object icon via the IPG icon selection screen depicted in FIG. 4.
FIG. 6 depicts a non-limiting example of an IPG configuration screen that is presented to a user after the user confirms icon selections by activating the "A" button (FIG. 2) while being presented with IPG icon selection screen depicted in FIG. 5.
FIG. 7A depicts a non-limiting example of an IPG configuration screen that can be used to adjust the size of an IPG channel area.
FIG. 7B depicts a non-limiting example of an IPG configuration screen that is presented to the user after the user activates the down arrow button while being presented with the IPG configuration screen depicted in FIG. 7A.
FIG. 7C depicts a non-limiting example of an IPG configuration screen that is presented to the user after the user activates the up arrow button while being presented with the IPG configuration screen depicted in FIG. 7A.
FIG. 8A depicts a non-limiting example of an IPG configuration screen that can be used to adjust the length and coverage of time columns in a main program display area.
FIG. 8B depicts a non-limiting example of an IPG configuration screen that is presented to the user after the user activates the right arrow button while being presented with the IPG configuration screen depicted in FIG. 8A.
FIG. 8C depicts a non-limiting example of an IPG configuration screen that is presented to the user after the user activates the left arrow button while being presented with the IPG configuration screen depicted in FIG. 8A.
FIG. 8D depicts a non-limiting example of an IPG configuration screen that is presented to the user after the user activates the up arrow button while being presented with the IPG configuration screen depicted in FIG. 8A.
FIG. 8E depicts a non-limiting example of an IPG configuration screen that is presented to the user after the user activates the up arrow button while being presented with the IPG configuration screen depicted in FIG. 8D.
FIG. 9A depicts a non-limiting example of an IPG configuration screen that can be used to adjust the content of a channel area.
FIG. 9B depicts a non-limiting example of an IPG configuration screen that is presented to the user after the user activates the down arrow button while being presented with the IPG configuration screen depicted in FIG. 9A.
FIG. 9C depicts a non-limiting example of an IPG configuration screen that is presented to the user after the user enters the numbers "3" and then "5" using a remote control device while being presented with the IPG configuration screen depicted in FIG. 9A.
FIG. 9D depicts a non-limiting example of an IPG configuration screen that is presented to the user after the user activates the left arrow button or the right arrow button while being presented with the IPG configuration screen depicted in FIG. 9C.
FIG. 10A depicts a non-limiting example of an IPG configuration screen that can be used to adjust IPG time listings.
FIG. 10B depicts a non-limiting example of an IPG configuration screen that is presented to the user after the user activates the right arrow button while being presented with the IPG configuration screen depicted in FIG. 10A.
FIG. 10C depicts a non-limiting example of an alternative embodiment to IPG configuration screen depicted in FIG. 10A.
FIG. 10D depicts a non-limiting example of an IPG configuration screen that is presented to a user after the user activates a right arrow button while being presented with the IPG configuration screen depicted in FIG. 10C.
FIG. 11A depicts a non-limiting example of an IPG configuration screen that can be used to adjust IPG channel listings.
FIG. 11B depicts a non-limiting example of an IPG configuration screen that is presented to the user after the user activates one of the arrow buttons while being presented with the IPG configuration screen depicted in FIG. 11A.
FIG. 12A depicts a non-limiting example of an IPG configuration screen that can be used to adjust the location of IPG channel an time listings.
FIG. 12B depicts a non-limiting example of an IPG configuration screen that is presented to the user after the user activates the right arrow button while being presented with the IPG configuration screen depicted in FIG. 12A.
FIG. 12C depicts a non-limiting example of an IPG configuration screen that is presented to the user after the user activates the up arrow button while being presented with the IPG configuration screen depicted in FIG. 12A.
FIG. 13A depicts a non-limiting example of an IPG configuration screen that can be used to change the location of an IPG video area.
FIG. 13B depicts a non-limiting example of an IPG configuration screen that is presented to the user after the user activates the left arrow button while being presented with the IPG configuration screen depicted in FIG. 13A.
FIG. 13C depicts a non-limiting example of an IPG configuration screen that is presented to the user after the user activates the down arrow button while being presented with the IPG configuration screen depicted in FIG. 13A.
FIG. 14A depicts a non-limiting example of an IPG configuration screen that can be used to delete IPG channel listings.
FIG. 14B depicts a non-limiting example of an IPG configuration screen that is presented to the user after the user activates the select button while being presented with the IPG configuration screen depicted in FIG. 14A.
FIG. 15A depicts a non-limiting example of an IPG configuration screen that can be used to delete IPG time listings.
FIG. 15B depicts a non-limiting example of an IPG configuration screen that is presented to the user after the user activates the select button while being presented with the IPG configuration screen depicted in FIG. 15A.
FIG. 16A depicts a non-limiting example of an IPG configuration screen that can be used to select individual IPG channel listings.
FIG. 16B depicts a non-limiting example of an IPG configuration screen that is presented to the user after the user activates the "A" button while being presented with the IPG configuration screen depicted in FIG. 16A.
FIG. 17A depicts a non-limiting example of an IPG configuration screen that can be used to select individual time listing.
FIG. 17B depicts a non-limiting example of an IPG configuration screen that is presented to the user after the user activates the "A" button while being presented with the IPG configuration screen depicted in FIG. 17A.
FIG. 18A depicts a non-limiting example of an IPG configuration screen that can be used to adjust the size of an IPG video area.
FIG. 18B depicts a non-limiting example of an IPG configuration screen that is presented to the user after the user activates the up arrow while being presented with the IPG configuration screen depicted in FIG. 18A.
FIG. 19 illustrates a non-limiting example of an IPG configuration screen that may, in one implementation, be presented to a user who activates the C button while being presented with the IPG screen depicted in FIG. 3.
FIG. 20 is a flow chart depicting non-limiting examples of IPG configuration menus that can be accessed by selecting options from a menu depicted in FIG. 19.
FIG. 21 is a flow chart depicting non-limiting examples of channel configuration menus that can be accessed by selecting options from a channel configuration menu depicted in FIG. 20.
FIG. 22 is a flow chart depicting non-limiting examples of time-listings configuration menus that can be accessed by selecting options from a time configuration menu depicted in FIG. 20.
FIG. 23 is a flow chart depicting non-limiting examples of video area configuration menus that can be accessed by selecting options from a video area configuration menu depicted in FIG. 20.
FIG. 24 depicts non-limiting examples of IPG audio configuration menus that can be accessed by selecting options from an audio configuration menu depicted in FIG. 20.

### DETAILED DESCRIPTION OF THE PREFERRED EMBODIMENTS

The preferred embodiments of the present invention now will be described more fully hereinafter with reference to the accompanying drawings. This invention may, however, be embodied in many different forms and should not be construed as limited to the embodiments set forth herein.

One embodiment of the present invention provides a system and method for configuring the appearance, sound, and content of an IPG in accordance with user input. Configurable IPG characteristics include those pertaining to channel listings, time listings, program information, and video and audio signals, among others. Non-limiting examples of configurable IPG characteristics include, among others, the number, type, identity, order, location, and/or orientation of channel listings presented; the number, coverage, identity, orientation, and/or location of time listings presented; the size and/or location of a video presentation area; and the volume and/or source of audio presented in conjunction with an IPG. Non-limiting examples of how IPG characteristics may be modified pursuant to user input are provided below.

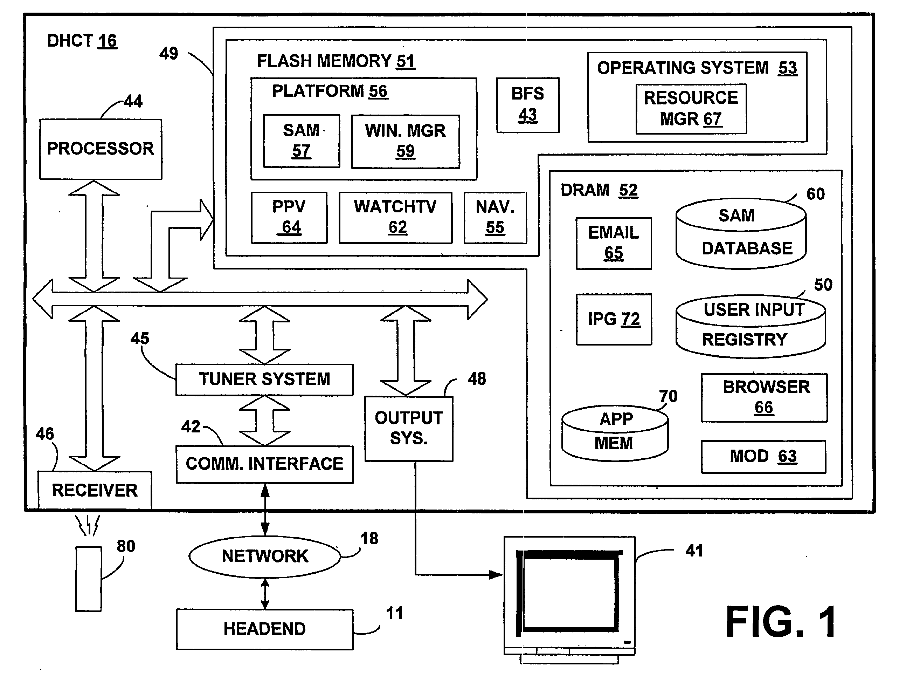

FIG. 1 is a block diagram illustrating a DHCT 16 that may be used to provide and configure an IPG in accordance with user input. The DHCT 16 described herein is merely illustrative and should not be construed as implying any limitations upon the scope of the present invention. Some of the functionality performed by applications executed in the DHCT 16 (such as an IPG client application 72) may instead be performed at the headend 11 and vice versa. A DHCT 16 is typically situated at a user's residence or place of business and may be a stand alone unit or integrated into another device such as, for example, a television set or a personal computer. The DHCT 16 preferably includes a communications interface 42 for receiving signals (video, audio and/or other data) from the headend 11 through a network 18 and for providing any reverse information to the headend 11 through the network 18. The network 18 may be, for example, a cable television network, a public switched telephone network (PSTN), a satellite communication network, the internet, etc. The headend 11 preferably includes one or more conventional server devices (not shown) for providing video, audio, and textual data to client devices such as DHCT 16.

The DHCT 16 further includes at least one processor 44 for controlling operations of the DHCT 16, an output system 48 for driving the display device 41, and a tuner system 45 for tuning into a particular television channel to be displayed and for sending and receiving various types of data or media from the headend 11. The display device 41 may be, for example, a television, a television monitor, a computer monitor, etc. The tuner system 45 includes, in one implementation, an out-of-band tuner for bi-directional quadrature phase shift keying (QPSK) data communication and a quadrature amplitude modulation (QAM) tuner for receiving television signals. Additionally, a receiver 46 receives externally-generated user inputs or commands from an input device such as, for example, a remote control device (RCD) 80.

In an alternative implementation, the DHCT 16 may also include one or more wireless or wired interfaces (not shown), also called ports, for receiving and/or transmitting data to other devices. For instance, the DHCT 16 may feature a USB (Universal Serial Bus), an Ethernet port (for connection to a computer), an IEEE-1394 connection (for connecting to consumer electronics equipment), an 802.11b wireless interface, a serial port, and/or a parallel port. In this manner, user inputs may, for example, be provided via a computer, via buttons or keys located on the exterior of the DHCT 16, via a hand-held remote control device, and/or via a keyboard that includes user-actuated buttons, etc.

In one implementation, the DHCT 16 includes system memory 49, which includes flash memory 51 and dynamic random access memory (DRAM) 52, for storing various applications, modules and data for execution and use by the processor 44. Basic functionality of the DHCT 16 is provided by an operating system 53 that is primarily stored in flash memory 51. Among other things, the operating system 53 includes at least one resource manager 67 that provides an interface to resources of the DHCT 16 such as, for example, computing resources.

One or more programmed software applications, herein referred to as applications, are executed by utilizing the computing resources in the DHCT 16. Applications stored in flash memory 51 or DRAM 52 are executed by one or more processors 44 (e.g., a central processing unit or digital signal processor) under the auspices of the operating system 53. Data required as input by an application is stored in DRAM 52 or flash memory 51 and read by processor 44 as need be during the course of the application's execution. Input data may be data stored in DRAM 52 by a secondary application or other source, either internal or external to the DHCT 16, or possibly anticipated by the application and thus created with the application at the time it was generated as a software application, in which case it is stored in flash memory 51. Data generated by an application is stored in DRAM 52 by processor 44 during the course of the application's execution. DRAM 52 also includes application memory 70 that various applications may use for storing and/or retrieving data.

An application referred to as navigator 55 is also resident in flash memory 51 for providing a navigation framework for services provided by the DHCT 16. The navigator 55 registers for and in some cases reserves certain user inputs related to navigational keys such as channel increment/decrement, last channel, favorite channel, etc. The client applications may be resident in flash memory 51 or downloaded into DRAM 52. The navigator 55 also provides users with television related menu options that correspond to DHCT functions such as, for example, providing an interactive program guide, blocking a channel or a group of channels from being displayed in a channel menu, and displaying a video-on-demand purchase list.

The flash memory 51 also contains a platform library 56. The platform library 56 is a collection of utilities useful to applications, such as a timer manager, a compression manager, a configuration manager, an HTML parser, a database manager, a widget toolkit, a string manager, and other utilities (not shown). These utilities are accessed by applications via application programming interfaces (APIs) as necessary so that each application does not have to contain these utilities. Two components of the platform library 56 that are shown in FIG. 1 are a window manager 59 and a service application manager client (SAM) 57.

The window manager 59 provides a mechanism for implementing the sharing of the screen regions and user input The window manager 59 on the DHCT 16 is responsible for, as directed by one or more applications, implementing the creation, display, and de-allocation of the limited DHCT 16 screen resources. It allows multiple applications to share the screen by assigning ownership of screen regions, or screens. The window manager 59 also maintains, among other things, a user input registry 50 in DRAM 52 so that when a user enters a key or a command via the RCD 80 or another input device such as a keyboard or mouse, the user input registry 50 is accessed to determine which of various applications running on the DHCT 16 should receive data corresponding to the input key and in which order. As an application is executed, it registers a request to receive certain user input keys or commands. When the user presses a key corresponding to one of the commands on the RCD 80, the command is received by the receiver 46 and relayed to the processor 44. The processor 44 dispatches the event to the operating system 53 where it is forwarded to the window manager 59 which ultimately accesses the user input registry 50 and routes data corresponding to the incoming command to the appropriate application.

The SAM client 57 is a client component of a client-server pair of components, with the server component being located on the headend 11. A SAM database 60 in DRAM 52 includes a data structure of services and a data structure of channels that are created and updated by the headend 11. Many services can be defined using the same application component, with different parameters. Examples of services include, without limitation and in accordance with one implementation, presenting television programs (available through a WatchTV application 62), pay-per-view events (available through a PPV application 64), digital music (not shown), media-on-demand (available through an MOD application 63), and an interactive program guide (available through an IPG application 72). In general, the identification of a service includes the identification of an executable application that provides the service along with a set of application-dependent parameters that indicate to the application the service to be provided. As a non-limiting example, a service of presenting a television program could be executed with a set of parameters to view HBO or with a separate set of parameters to view CNN. Each association of the application component (tune video) and one parameter component (HBO or CNN) represents a particular service that has a unique service I.D. The SAM client 57 also interfaces with the resource manager 67, as discussed below, to control resources of the DHCT 16.

Application clients can also be downloaded into DRAM 52 at the request of the SAM client 57, typically in response to a request by the user or in response to a message from the headend. In this non-limiting example DRAM 52 contains an IPG application 72, a media-on-demand application (MOD) 63, an e-mail application 65, and a web browser application 66, among others (not shown). It should be clear to one with ordinary skill in the art that these applications are not limiting and merely serve as examples for this present embodiment of the invention. Furthermore, one or more DRAM based applications may, as an alternative embodiment, be resident in flash memory 51. These applications, and others provided by the cable system operator, are top level software entities on the network for providing services to the user.

In one implementation, applications executing on the DHCT 16 work with the navigator 55 by abiding by several guidelines. First, an application utilizes the SAM client 57 for the provision, activation, and suspension of services. Second, an application shares DHCT 16 resources with other applications and abides by the resource management policies of the SAM client 57, the operating system 53, and the DHCT 16. Third, an application handles situations where resources are only available with navigator 55 intervention. Fourth, when an application loses service authorization while providing a service, the application suspends the service via the SAM (the navigator 55 will reactivate an individual service application when it later becomes authorized). Finally, an application client is designed to not have access to certain user input keys reserved by the navigator (i.e., power, channel +/-, volume +/-, etc.).

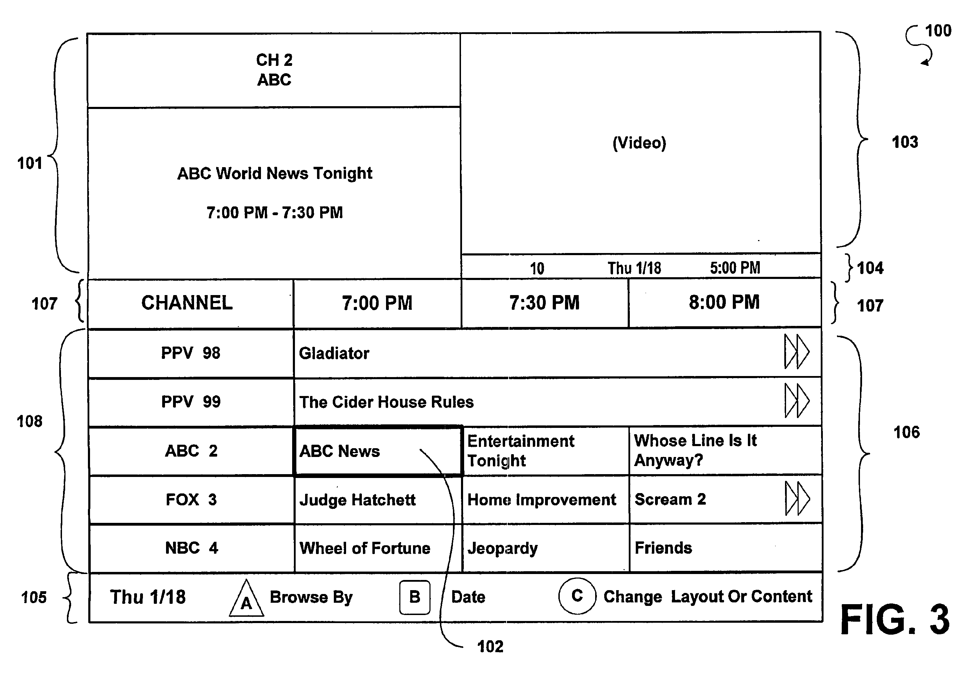

The IPG application 72 provides a user with IPG screens such as, for example, IPG screen 100 (FIG. 3) containing television program information. Television program information presented via an IPG screen may be retrieved from application memory 70. IPG application 72 works in cooperation with window manager 59 to present a user with IPG screens that are formatted in accordance with IPG configuration data that is stored in application memory 70. IPG configuration data may also be stored in non-volatile memory so that it is not erased when the DHCT 16 loses power. In an alternative implementation, IPG configuration data may also be stored at the headend 11 and retrieved as needed by the DHCT 16. IPG configuration data may be modified pursuant to user input requesting a change in IPG screen configuration, as discussed further below.

Data and software used in providing a DHCT service to a user may be stored in one or more of the following memory resources: a data storage device located at a headend, a data storage device connected to the DHCT via a local network, a non-volatile memory internal to the DHCT, and/or a hard drive internal to the DHCT. For example, an executable program or algorithm corresponding to an operating system (OS) component, or to a client platform component, or to a client application (e.g. IPG application 72), or to respective parts thereof, may reside in and/or execute out of DRAM 52 and/or flash memory 51, or may reside in a local storage device connected to DHCT 16 and may be transferred into DRAM 52 for execution. Likewise, data input for an executable program or algorithm may reside in DRAM 52 or in flash memory 51, or may reside in a local storage device connected to the DHCT 16 and may be transferred into DRAM 52 for use by an executable program or algorithm. In addition, data output by an executable program or algorithm may be written into DRAM 52 by the executable program or algorithm and may be transferred to flash memory 51 or to a local storage device for storage purposes. It should be noted, however, that the present invention is not limited by where or how any data and/or applications are stored or retrieved.

Each of the above mentioned applications comprises executable instructions for implementing logical functions and can be embodied in any memory for use by or in connection with an instruction execution system, apparatus, or device, such as a computer-based system, processor-containing system, or other system that can fetch and execute the instructions. In the context of this document, a "memory" can be any means that can contain, store, communicate, propagate, or transport the program for use by or in connection with the instruction execution system, apparatus, or device. The memory can be, for example but not limited to, an electronic, magnetic, optical, electromagnetic, infrared, or semiconductor system, apparatus, device, or propagation medium. More specific examples (a non-exhaustive list) of the memory would include the following: an electrical connection (electronic) having one or more wires, a portable computer diskette (magnetic), a random access memory (RAM) (electronic), a read-only memory (ROM) (electronic), an erasable programmable read-only memory (EPROM or Flash memory) (electronic), an optical fiber (optical), and a portable compact disc read-only memory (CDROM) (optical). Note that the memory could even be paper or another suitable medium upon which the program is printed, as the program can be electronically captured, via for instance optical scanning of the paper or other medium, then compiled, interpreted or otherwise processed in a suitable manner, and then stored in a computer memory.

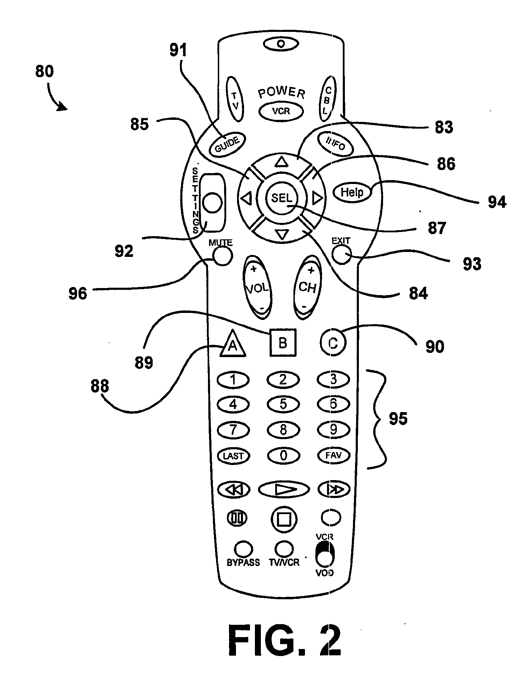

FIG. 2 illustrates a non-limiting example of a remote control device (RCD) 80 that is used to provide user input to the DHCT 16. Four arrow buttons are provided including an up arrow button 83, a down arrow button 84, a left arrow button 85, and a right arrow button 86. These arrow buttons 83-86 can be used to scroll through options and/or to highlight an option. The select button 87 may be used to select a currently highlighted option that is provided to the user. The guide key 91 may be used to access a television program guide, as discussed below. Many alternative methods of providing user input may be used including a remote control device with different buttons and/or button layouts, a keyboard device, a voice activated device, etc. The invention described herein is not limited by the type of device used to provide user input. Furthermore, the functionality of the buttons on the remote control device described herein is merely illustrative and should not be construed as implying any limitations upon the scope of the present invention

With continued reference to FIGS. 1 and 2, FIG. 3 depicts a non-limiting example of an IPG screen 100 that illustrates an initial program guide arrangement in a time format. IPG screen 100 may be presented by the DHCT 16 (FIG. 1) in response to user input that is provided, for example, via the activation of the guide key 91 (FIG. 2). An IPG screen that is requested by a user is configured in accordance with IPG configuration data that is stored in memory, and therefore may have a different configuration than IPG screen 100 since the IPG configuration data can be modified by the user. As with other screen examples discussed below, processor 44 executes program instructions of the IPG application 72 that cause it to direct the window manager 59 to create screen 100 via display data that is formatted for display device 41. Processor 44 stores the display data or parts thereof in DRAM 52 (as necessary) and transfers the display data to a display output system, such as output system 48, wherein the display data is converted to television signals and transmitted to display device 41. Of course, the scope of the invention also includes any other method of causing the described screens to appear to the user.

The top left portion of IPG screen 100 is a detailed focus area 101 that includes detailed channel information (channel number, channel name (ABC®), program name, program description, duration, any episode information or rating, etc.) for a program displayed in the highlighted program area 102 in a main program display area 106. Video showing on the channel to which the DHCT 16 is currently tuned (for which audio is also playing, and which is typically the program occupying the full screen before the user is presented with IPG screen 100) is displayed in a video area 103 in the IPG screen 100. Immediately below the video area 103 is an information banner 104 depicting the channel to which the DHCT 16 is currently tuned (e.g., channel 10), the current day and date (e.g., Thursday, January 18), and the current time (e.g., 5:00 p.m.). The main program display area 106 contains television program titles corresponding to television programs that are or will be available for viewing during the time periods listed under the time area 107 and that correspond to respective television channels identified in channel area 108. The highlighted program area 102 is centered in the main program display area 106 enabling the user to scroll up and down to the various program titles listed in the main program display area 106.

The main program display area 106 includes program names organized in a grid of rows of channels and columns of time. The channel area 108 includes a vertical list of channels organized sequentially from top to bottom by increasing channel number. The main program display area 106 can be scrolled in both time and channel number dimensions. As the user scrolls in time across a calendar day boundary, the selected day displayed in various areas is automatically updated.

Though other implementations are contemplated within the scope of the present invention, when the IPG application is first activated by the user, the first, or lowest, channel, including channel name and number, in the channel lineup is typically centered in the channel area 108 (unless the IPG screen 100 has been pre-configured in a different manner). In this non-limiting example, the lowest channel in this channel list displayed in the channel area 108 is ABC®, which is shown as channel 2. Continuing with this non-limiting example, the left-most time column in the main program display area 106 is set to include titles of programs scheduled to be broadcast about two hours into the future with the middle title being highlighted and corresponding to a program on the lowest channel. Therefore, in this example, the program ABC News® which will be on channel 2, is centered in the highlighted program area 102. It should be noted that the current program shown in video area 103 and referenced in information banner 104, corresponds to a currently tuned channel, which in this example is channel 10, and not to the highlighted program on channel 2. The bottom area 105 of IPG screen 100 indicates the selected day for which program data is being displayed as well as information about the current functions of the "A", "B", and "C" keys on the RCD 80. In this example, the A button 88 can be used to access a browse-by list for requesting an IPG screen that contains a subset of television programs falling under a user selected browse-by category such as, for example, comedy, drama, action/adventure, sports, etc.; the B button 89 can be used to request an IPG screen containing program listings for a user selected date; and the C button 90 can be used to initiate a process for configuring the content and/or layout of an IPG screen.

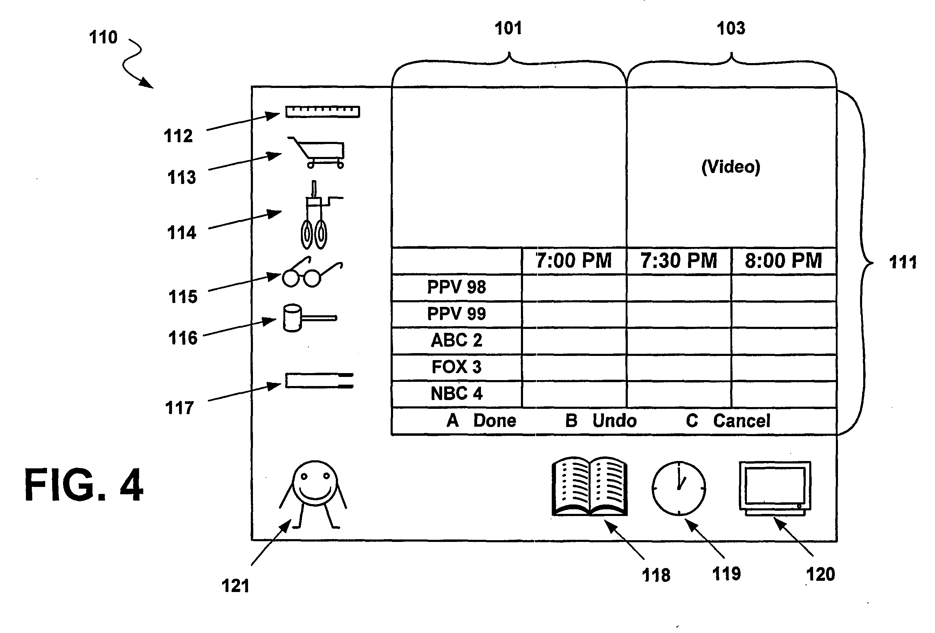

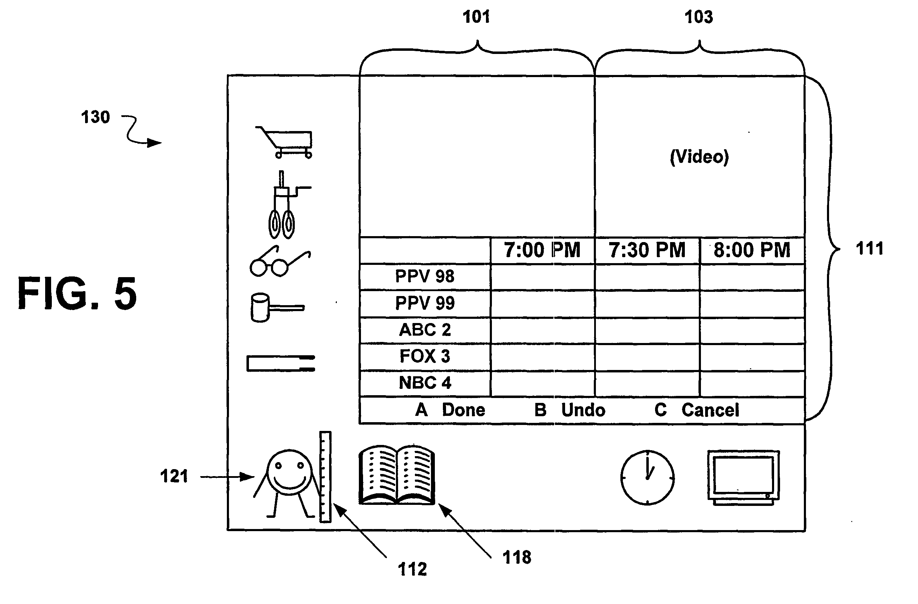

FIG. 4 depicts a non-limiting example of an IPG icon selection screen 110 that is presented to a user in response to the activation of the C button 90 on the remote control device 80 while being presented with the IPG screen 100. The tool icons 112-117 represent actions that can be performed to reconfigure an IPG screen whereas the object icons 118-120 represent aspects of an IPG screen that can be configured. In this non-limiting example, the tool icons include a ruler icon 112 for sizing, a cart icon 113 for moving, a mixer icon 114 for sorting, a glasses icon 115 for filtering, a mallet 116 icon for deleting, and a tweezers icon 117 for making selections. The object icons include a book icon 118 that represents the channel listings, a clock icon 119 that represents the time listings, and a television icon 120 that represents the video area 103. In an alternative embodiment, a user is also provided with icons representing other aspects of an IPG screen that may be configured via user input. As a non-limiting example, a user may be provided with a pen icon and a speaker icon (not shown) representing television program information and audio signals, respectively, so that a user may be able to modify such aspects of an IPG screen. In a preferred embodiment, one of the icons is initially highlighted (not shown) in order to suggest to the user that the arrow buttons 83-86 can be used to highlight a desired icon. A user can select a tool icon and an object icon by using one of the arrow buttons 83-86 to highlight an icon and the select button 87 to select a highlighted icon. In an alternative embodiment, a pointer (not shown) is displayed on the icon selection screen 110, and can be manipulated via the arrow buttons 83-86 on the remote control 80 (FIG. 2) or via another device such as, for example, a mouse (not shown) in order to select an icon. After an icon is selected, it is displayed closer to a person icon 121 as shown in FIG. 5.

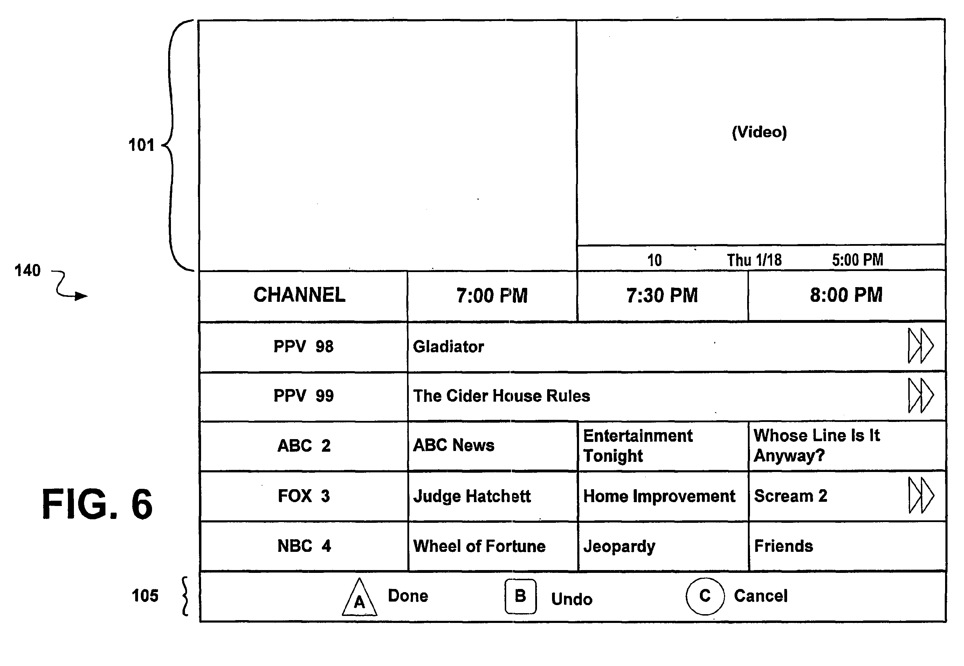

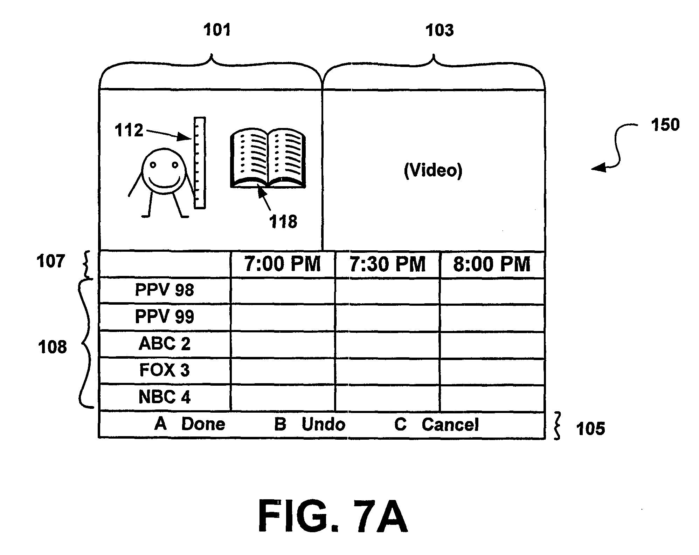

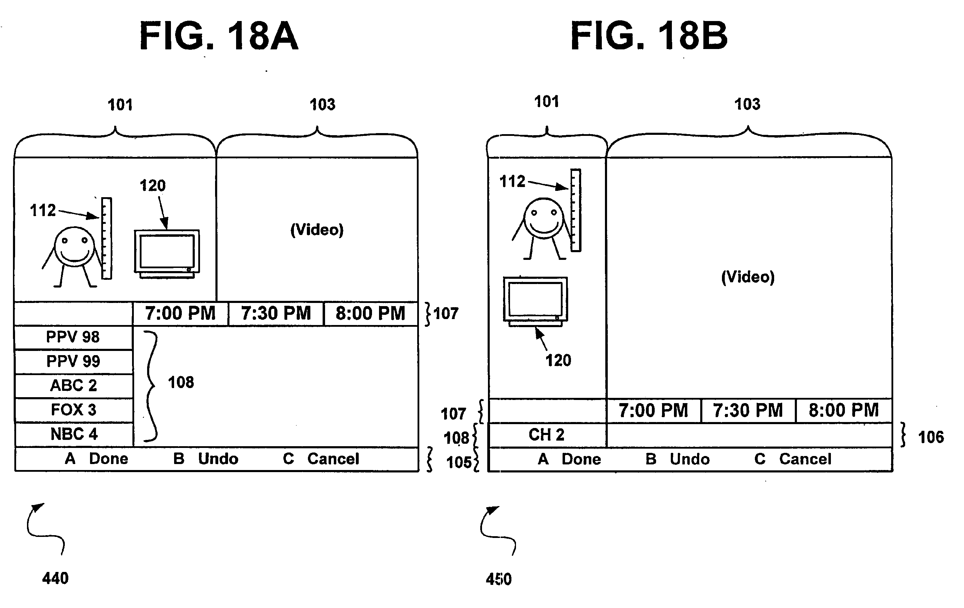

FIG. 5 depicts a non-limiting example of an IPG icon selection screen 130 that is presented to a user after the user selects a tool icon and an object icon via IPG icon selection screen 110. In this example, the selected tool icon is a ruler icon 112 and the selected object icon is a book icon 118. A user can activate the "A" button 88 (FIG. 2) to confirm icon selections, the "B" button 89 (FIG. 2) to undo a selection, and the "C" button 90 (FIG. 2) to return to the IPG screen 100. In one embodiment, activating the "A" button 88 on the remote control device 80 (FIG. 2) results in the presentation of an IPG configuration screen 140 (FIG. 6). In an alternative embodiment, the IPG icon selection screen 130 continues to be presented to the user after the user activates the "A" button 88. In this alternative embodiment, a user can alter the layout and/or content of the reduced IPG area 111 by activating the arrow buttons 83-86 (FIG. 2). The effect of activating a particular arrow button depends on the icons that are currently selected and may be similar to the effects as discussed in relation to FIGS. 7A-18B. A user can implement changes made to the reduced IPG area 111 by activating the "A" button 88. Once a new IPG screen configuration is implemented, IPG screens subsequently presented to the user are consistent with the IPG configuration as implemented via IPG icon selection screen 130. FIG. 6 depicts a non-limiting example of an IPG configuration screen 140 that is presented to a user after the user confirms icon selections by activating the "A" button 88 (FIG. 2) while being presented with IPG configuration screen 130. IPG configuration screen 140 can be used to configure the appearance and/or content of IPG screens that are subsequently presented to the user. The purpose of IPG configuration screen 140 is not necessarily to provide television program information. Therefore in an alternative embodiment the screen 140 may not contain any television program information. In a preferred embodiment, the selected icons are displayed in the detailed focus area 101, in an alternative embodiment, the icons selections are displayed in the bottom area 105. Additional instructions may be presented to a user in response to the activation of the help button 94 (FIG. 2). The additional instructions may be displayed in the detailed focus area 101 or in the bottom area 105. In this non-limiting example, a user can alter the layout and/or content of the IPG configuration screen 140 by activating the arrow buttons 83-86 (FIG. 2). The effect of activating a particular arrow button depends on the icons selected via IPG configuration screen 130. FIGS. 7A-18B illustrate a few non-limiting examples of how an IPG configuration screen, such as IPG configuration screen 140, may be used to configure an IPG display. As suggested in bottom area 105 in each of the examples in FIGS. 6-18B, a user can activate the "A" button 88 to implement a new IPG screen configuration, the "B" button 89 to undo one or more changes, and the "C" button 90 to cancel the configuration process. Canceling the configuration process preferably results in the presentation of the IPG screen that was being presented to the user prior to the initiation of the configuration process. Therefore, in this example, canceling the configuration process results in the presentation of IPG screen 100 (FIG. 3). Once a new IPG screen configuration is implemented, IPG screens subsequently presented to the user are consistent with the IPG configuration as determined by a user via an IPG configuration screen. A user configured IPG screen may be presented in response to a subsequent user request for an IPG screen. The request may be made via, for example, the activation of the guide button 91 (FIG. 2).

FIG. 7A depicts a non-limiting example of an IPG configuration screen 150 that is presented to a user who selects a ruler icon 112 and a book icon 118 via IPG icon selection screen 130. Selection of the ruler icon 112 in conjunction with the book icon 118 allows a user to adjust the size of the channel area 108. In one embodiment, a user can request an increase or decrease in the size of the channel area 108 by activating the up button 83 or the down button 84 (FIG. 2), respectively. Each time that the user activates the down arrow button 84, the number of channels listed in the channel display area is reduced by one. Similarly, each time that the user activates the up arrow 83, the number of channels listed in the channel display area is increased by one.

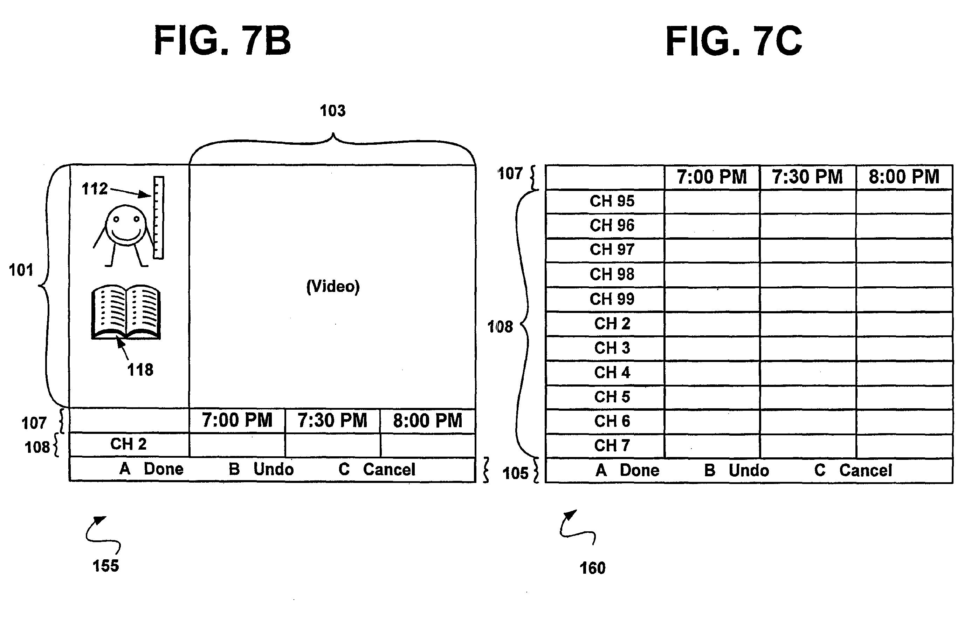

FIG. 7B depicts a non-limiting example of an IPG configuration screen 155 that is presented to the user after the user activates the down arrow button 84 while being presented with IPG configuration screen 150 (FIG. 7A). As a result of activating the down arrow button 84, channel area 108 of IPG screen 155 contains fewer channel listings than channel area 108 of IPG screen 150. Furthermore, space occupied by the channel area 108 is smaller and the space occupied by the video area 103 is larger as compared to the channel area 108 and the video area 103, respectively, in IPG screen 150.

FIG. 7C depicts a non-limiting example of an IPG configuration screen 160 that is presented to the user after the user activates the up arrow button 83 while being presented with IPG configuration screen 150 (FIG. 7A). As a result of activating the up arrow button 83, channel area 108 of IPG screen 160 is larger and contains six more channel listings than channel area 108 of IPG screen 150. Furthermore, a video area 103 and a detailed focus area 101 (FIG. 7A) are no longer included due to a lack of remaining space. In an alternative embodiment, activating the up arrow button 83 does not change the size of the channel area 108; instead, the font size used for the channel listings is reduced in order to accommodate more listings.

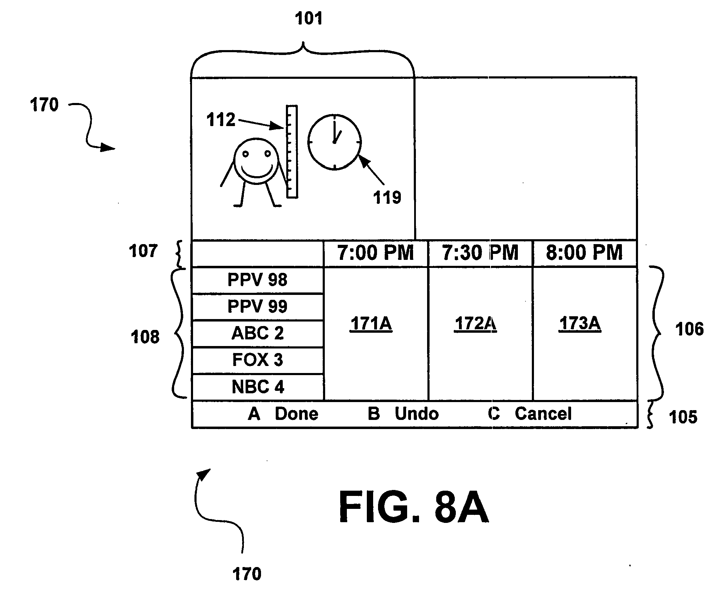

FIG. [FIG.] 8A depicts a non-limiting example of an IPG configuration screen 170 that is presented to a user who selects a ruler icon 112 and a clock icon 119 via IPG icon selection screen 130. Selection of the ruler icon 112 in conjunction with the clock icon 119 allows a user to adjust the length and coverage of the time columns 171A, 172A, & 173A. In one embodiment, a user can request a change in the length or duration of the time columns 171A, 172A, & 173A by activating any one of the arrow buttons 83-86 (FIG. 2) while being presented with IPG configuration screen 170 (FIG. 8A). For illustration purposes, the rows in main program display area 106 are not shown in FIGS. 8A-8E.

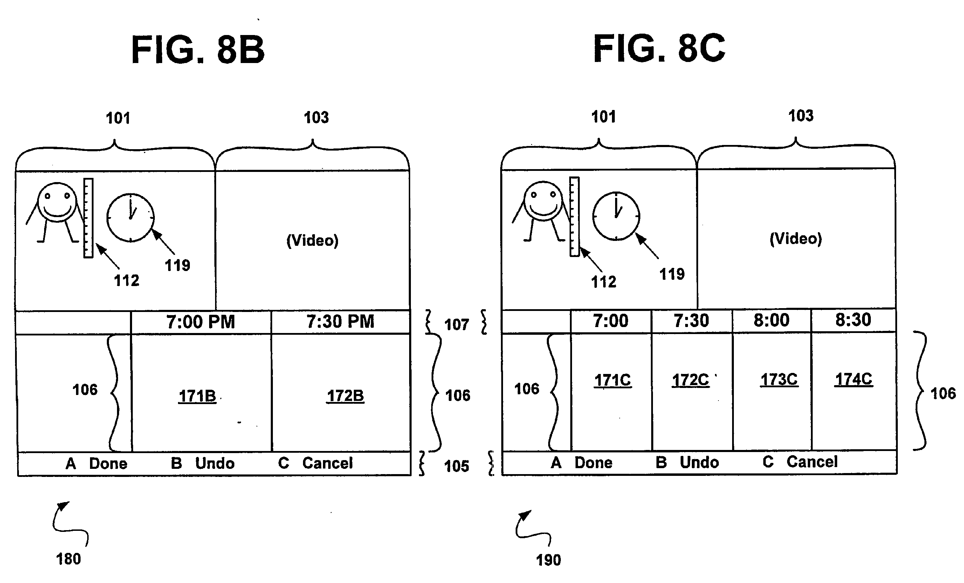

FIG. 8B depicts a non-limiting example of an IPG configuration screen 180 that is presented to the user after the user activates the right arrow button 86 while being presented with IPG configuration screen 170 (FIG. 8A). As a result of activating the right arrow button 86, the user is presented with an IPG screen 180 having time columns 171B and 172B that are wider that the corresponding time columns 171A and 172A in IPG screen 170 (FIG. 8A). Furthermore, the user is only presented with two time columns 171B and 172B (FIG. 8B) instead of three columns 171A, 172A, and 173A (FIG. 8A). Although, for illustration purposes, channel listings are not shown in configuration screens 180 and 190 (FIGS. 8B and 8C, respectively), they are preferably included in those screens 180 and 190

FIG. 8C depicts a non-limiting example of an IPG configuration screen 190 that is presented to the user after the user activates the left arrow button 85 while being presented with IPG configuration screen 170 (FIG. 8A). As a result of activating the left arrow button 85, the user is presented with an IPG screen 190 having time columns 171C, 172C, & 173C that are narrower than the corresponding time columns 171A, 172A, and 173A in IPG screen 170 (FIG. 8A). Furthermore, the user is presented with four time columns 171C, 172C, 173C & 174C (FIG. 8C) instead of only three columns 171A, 172A, and 173A (FIG. 8A).

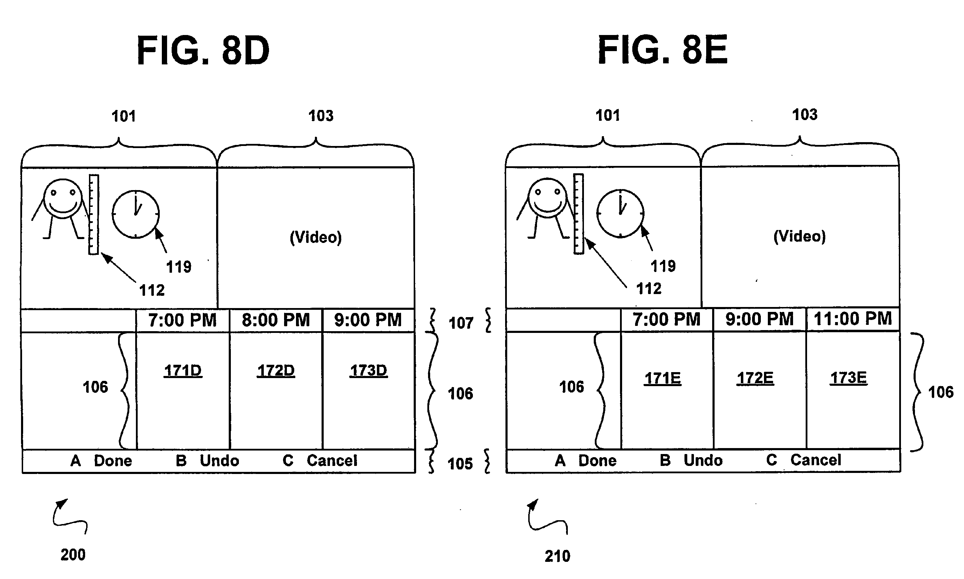

FIG. 8D depicts a non-limiting example of an IPG configuration screen 200 that is presented to the user after the user activates the up arrow button 83 while being presented with IPG configuration screen 170 (FIG. 8A). As a result of activating the up arrow button 83, the user is presented with an IPG screen 200 having time columns 171D, 172D, & 173D that have greater time coverage than the corresponding time columns 171A, 172A, and 173A in IPG screen 170 (FIG. 8A). Whereas each time column in IPG screen 170 has a half-hour time coverage, each time column in IPG screen 200 has a one hour time coverage. Therefore, the total time period covered in IPG screen 200 is equal to twice the total time period covered in IPG screen 170.

FIG. 8E depicts a non-limiting example of an IPG configuration screen 210 that is presented to the user after the user activates the up arrow button 83 while being presented with IPG configuration screen 200 (FIG. 8D). As a result of activating the up arrow button 83, the user is presented with an IPG screen 210 having time columns 171E, 172E, & 173E that have greater time coverage than the corresponding time columns 171D, 172D, and 173D in IPG screen 200 (FIG. 8D). Whereas each time column in IPG screen 200 has a one hour time coverage, each time column in IPG screen 210 has a two hour time coverage. Therefore, the total time period covered in IPG screen 210 is equal to twice the total time period covered in IPG screen 200. In other embodiments, the change in time coverage in response to each user input may be, for example, only half an hour.

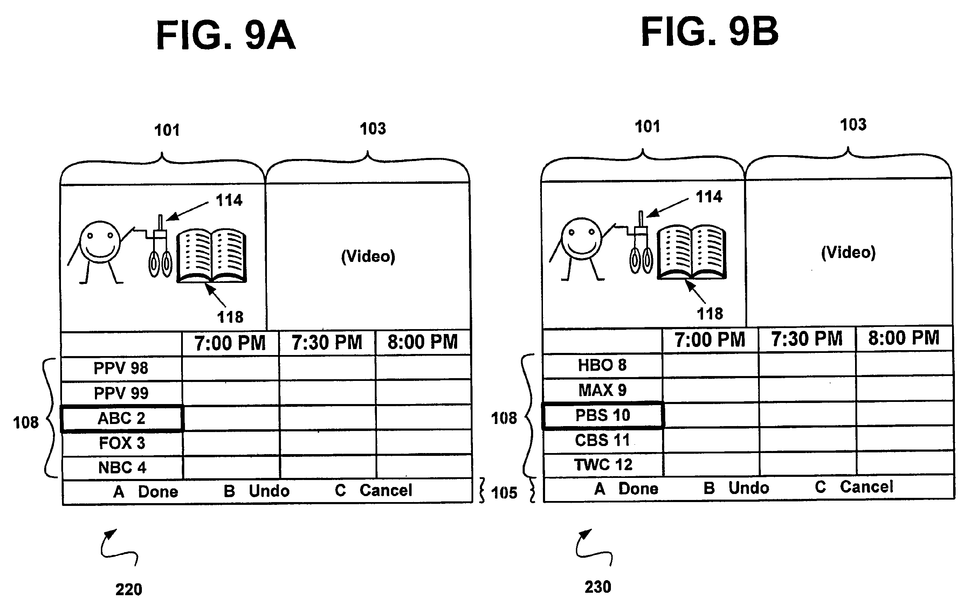

FIG. 9A depicts a non-limiting example of an IPG configuration screen 220 that is presented to a user who selects a mixer icon 114 and a book icon 118 via IPG icon selection screen 130. Selection of the mixer icon 114 in conjunction with the book icon 118 allows a user to determine the manner in which channels are listed in channel area 108. In one embodiment, a user can designate a channel as the initially highlighted channel by using the up and down arrow button 83 & 84 (FIG. 2) to scroll through a list of available channels until the desired channel is highlighted, and by then activating the "A" button 88 (FIG. 2). The "initially highlighted" channel is the channel that is highlighted when an IPG screen is initially presented to a user. If an odd number of channel listings is presented, then the initially highlighted channel is typically the middle channel. Alternatively, a user may identify a channel as the initially highlighted channel by using a number section 95 on the remote control device 80 (FIG. 2) to enter a corresponding channel number. A user may also use the left and right arrow buttons 85 & 86 to determine whether the channels are to be listed in increasing or decreasing numerical order from top to bottom in channel area 108.

FIG. 9B depicts a non-limiting example of an IPG configuration screen 230 that is presented to the user after the user repeatedly activates the down arrow button 84 (FIG. 2) while being presented with IPG configuration screen 220 (FIG. 9A). Channel area 108 of IPG screen 230 indicates that "PBS 10" is currently the highlighted channel. The user may then activate the "A" button 88 to designate PBS® as the initially highlighted channel. As a result of this designation, the next time that an IPG is requested by a user, the PBS® channel will be presented as the initially highlighted channel. Note that according to the example depicted in FIG. 9B, channel listings would continue being displayed in increasing numerical order.

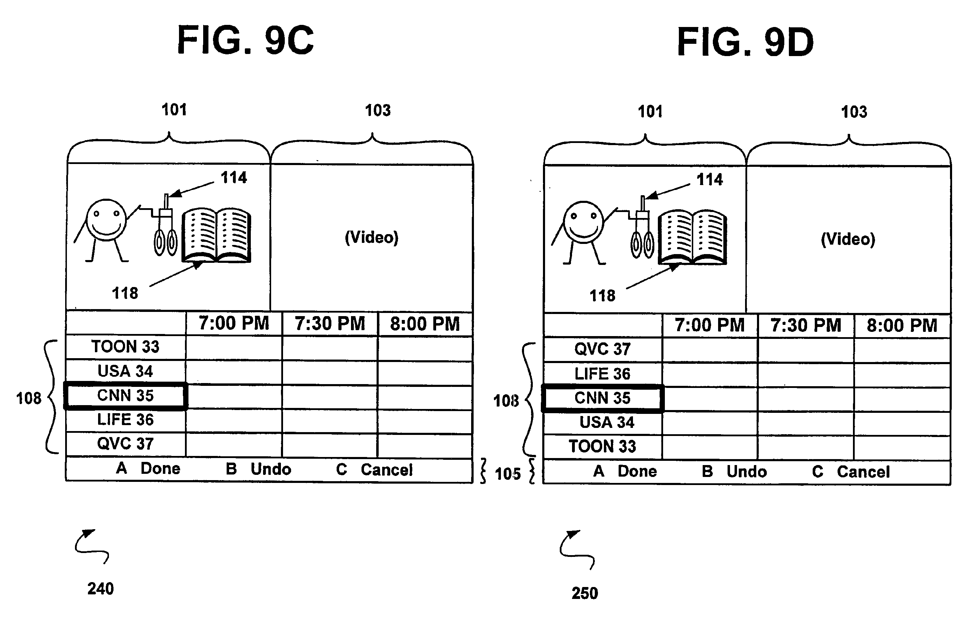

FIG. 9C depicts a non-limiting example of an IPG configuration screen 240 that is presented to the user after the user enters the number "35" using the remote control device 80 (FIG. 2) while being presented with IPG configuration screen 220 (FIG. 9A). By entering the number "35" using the remote control device 80, the user is presented with an IPG configuration screen 240 that includes "CNN 35" as the highlighted channel. The user may alternatively activate the down arrow 84 (FIG. 2) until "CNN 35" is displayed as the highlighted channel. The user may then activate the "A" button 88 to designate CNN® as the initially highlighted channel. As a result of this designation, the next time that an IPG is requested by a user, CNN® will be presented as the initially highlighted channel.

FIG. 9D depicts a non-limiting example of an IPG configuration screen 250 that is presented to the user after the user activates the left arrow button 85 or the right arrow button 86 (FIG. 2) while being presented with IPG configuration screen 240 (FIG. 9C). As a result of activating arrow button 85 or 86, the channels are listed in decreasing numerical order from top to bottom in channel area 108. Note that the highlighted channel in channel area 108 remains "CNN 35." By reactivating arrow button 85 or 86, the channels would again be listed in increasing numerical order from top to bottom in channel area 108 as shown in IPG configuration screen 240 (FIG. 9C).

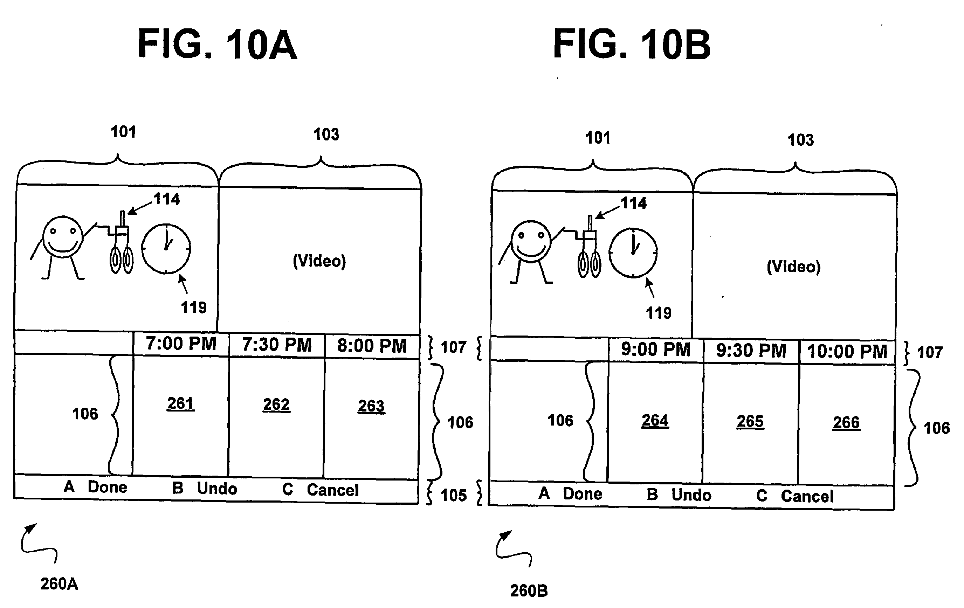

FIG. 10A depicts a non-limiting example of an IPG configuration screen 260A that is presented to a user who selects a mixer icon 114 and a clock icon 119 via IPG icon selection screen 130. Selection of the mixer icon 114 in conjunction with the clock icon 119 allows a user to determine the time period covered by time columns 261-263. In one embodiment, a user can determine the time period covered by time columns 261-263 by using the left and right arrow buttons 85 & 86 to scroll through the available time columns until the desired time period is covered by the time columns shown in main program display area 106.

FIG. 10B depicts a non-limiting example of an IPG configuration screen 260B that is presented to the user after the user repeatedly activates the right arrow button 86 (FIG. 2) while being presented with IPG configuration screen 260A (FIG. 10A). Each time the user activates the right arrow button 86, the time period covered by the time columns 264-266 shifts by a half-hour increment in the implementation shown. The time area 107 of IPG screen 260B indicates that the time period covered by the columns 264-266 is 9:00 p.m. - 10:00 p.m. and therefore represents a two hour time shift from the time period covered by columns 261-263 (FIG. 10A). In an alternative embodiment, the up and down arrow buttons 83 & 84 may be used to adjust the time period covered by the time columns in main program display area 106.

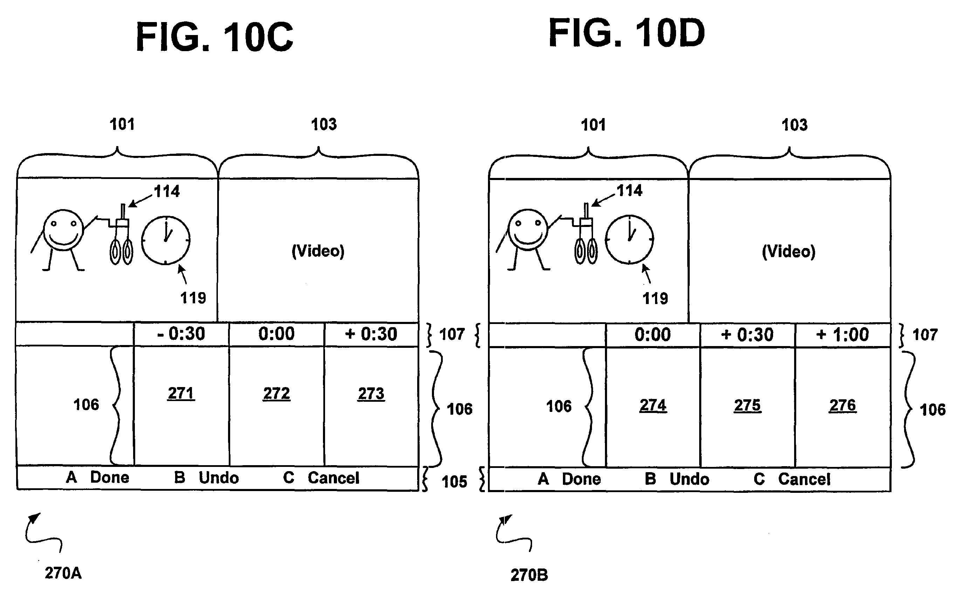

FIG. 10C depicts a non-limiting example of an alternative embodiment to IPG configuration screen 260A. In this example, selection of the mixer icon 114 in conjunction with the clock icon 119 allows a user to determine the relative time period covered by the time listings initially presented to a user who requests an IPG. In other words, IPG configuration screen 260A allows a user to determine the initial time listings presented in an IPG relative to the time that the IPG is requested by the user. In one embodiment, a user can determine the relative time period covered by time columns 271-273 by using the left and right arrow buttons 85 & 86 to scroll through the available time shifts until the desired time shifts are displayed in the time columns shown in main program display area 106. Selecting "0:00" as designation for a time column results in an initial time listing for that column that is nearest to the time that the IPG is requested ("the current time"). On the other hand, selecting a time increment or decrement for a time column results in an initial time listing for that column that is nearest to a respectively incremented or decremented current time. For example, if the time designations in columns 271-273 are selected, and if the user at some later time requests an IPG at 7:00 p.m., then the user will be presented with an IPG having time listings of 6:30 p.m., 7:00 p.m., and 7:30 p.m.

FIG. 10D depicts a non-limiting example of an IPG configuration screen 270B that is presented to the user after the user activates the right arrow button 86 (FIG. 2) while being presented with IPG configuration screen 270A (FIG. 10C). Each time the user activates the right arrow button 86, the relative time period covered by the time columns 274-276 is shifted by a half-hour increment. The time area 107 of IPG screen 270B indicates that the relative time periods covered by the columns 274-276 are 0:00, + 0:30, and + 1:00. and therefore represents a half-hour time shift from the relative time period covered by columns 271-273(FIG. 10C).

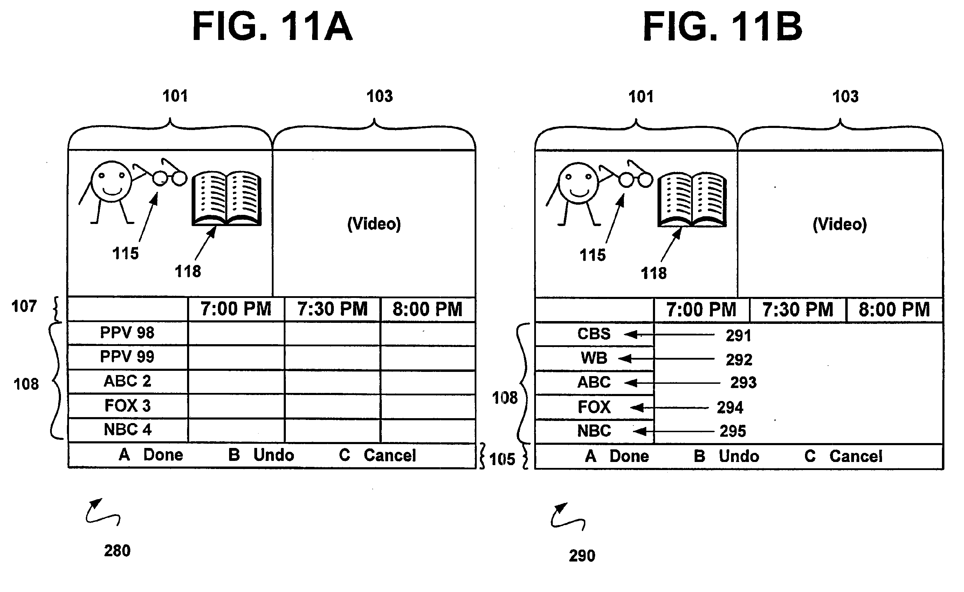

FIG. 11A depicts a non-limiting example of an IPG configuration screen 280 that is presented to a user who selects a glasses icon 115 and a book icon 118 via IPG icon selection screen 130. Selection of the glasses icon 115 in conjunction with the book icon 118 allows a user to determine the type of channels listed in channel area 108. In one embodiment, a user can change the type of channels listed in channel area 108 by using the arrow button 83-86. Each time the user activates an arrow button, the type of channels listed in channel area changes. Non-limiting examples of the types of channels that may be listed in channel area 108 include: major network, sports, news, movie, kid's, music, and foreign. A channel may be classified based on the type(s) of television programs it provides or based on its reputation.

FIG. 11B depicts a non-limiting example of an IPG configuration screen 290 that is presented to the user after the user activates one of the arrow buttons 83-86 (FIG. 2) while being presented with IPG configuration screen 280 (FIG. 11A). As a result of activating an arrow button, the channels listed in channel area 108 are selected to only include major network channels. In other words, non-major network channels are filtered out. In this example, the major network channels listed in channel area 108 are CBS® 291, WB® 292, ABC® 293, FOX® 294, NBC® 295. By reactivating an arrow button, the user may be presented with a different type of television channels such as, for example, sports channels.

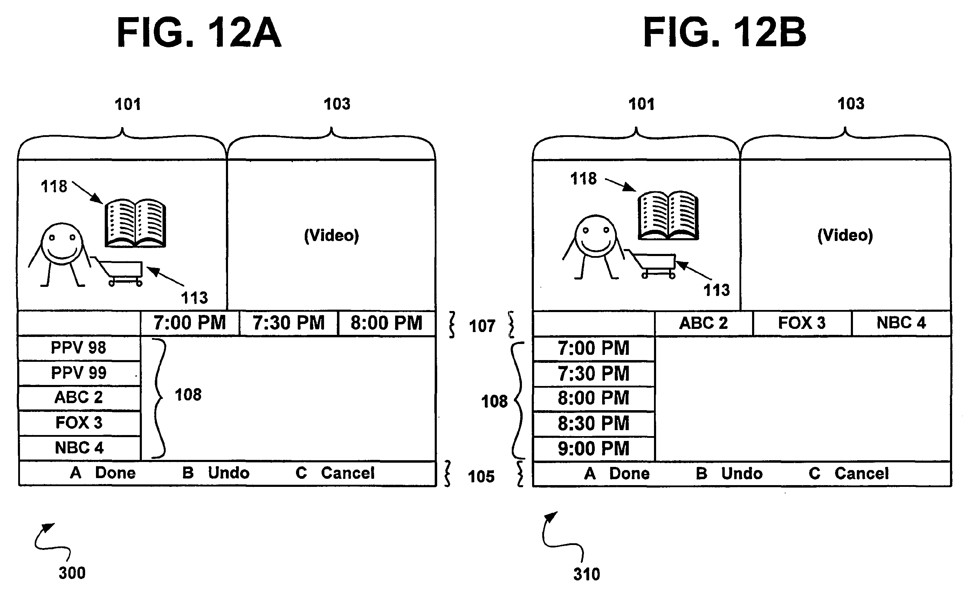

FIG. 12A depicts a non-limiting example of an IPG configuration screen 300 that is presented to a user who selects a cart icon 113 and a book icon 118 via IPG icon selection screen 130. Selection of the cart icon 113 in conjunction with the book icon 118 allows a user to alter the orientation and/or location of the channel and time listings. Similar results may be obtained through the selection of the cart icon 113 in conjunction with the clock icon 119. A user may alter the orientation of channel listings in channel area 108 by activating the right arrow button 86 (FIG. 2). In an alternative embodiment, the user may also alter the orientation of channel listings in channel area 108 by activating the left arrow button 85. Furthermore, a user can change the location of the channel area 108, the time area 107, and the main program display area 106 by activating the up arrow button 83.

FIG. 12B depicts a non-limiting example of an IPG configuration screen 310 that is presented to the user after the user activates the right arrow button 86 (FIG. 2) while being presented with IPG configuration screen 300 (FIG. 12A). As a result of activating the right arrow button 86, some of channels listed in channel area 108 are instead listed in time area 107, and the times displayed in time area 107 are instead displayed in channel area 108. In this manner, the orientation of the channel listings is changed from vertical to horizontal, and the orientation of the time listings are changed from horizontal to vertical. In this example, the number channel and time listings displayed at any one time is adjusted so that all the available slots in the channel area 108 and the time area 107 are occupied by a listing. Therefore, since channel area 108 has five slots, five time listings area displayed in the channel area 108. Similarly, since time area 107 has three slots, three channel listings are displayed in time area 107.

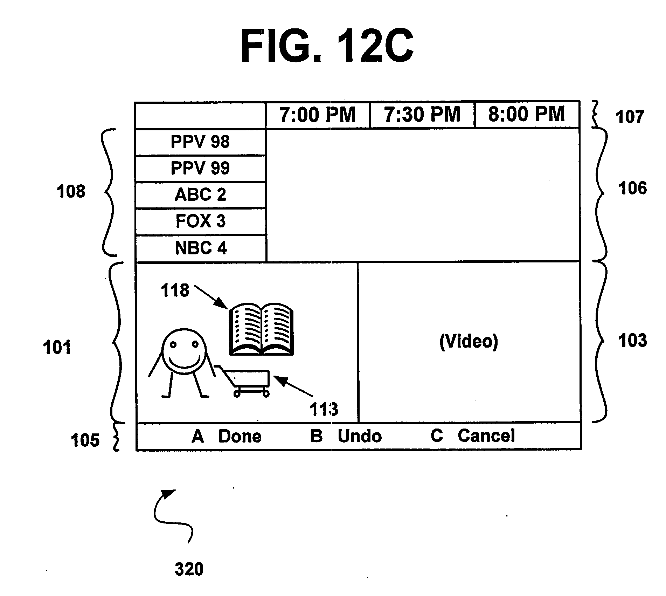

FIG. 12C depicts a non-limiting example of an IPG configuration screen 320 that is presented to the user after the user activates the up arrow button 83 (FIG. 2) while being presented with IPG configuration screen 300 (FIG. 12A). As a result of activating the up arrow button 83, the channel area 108, the time area 107, and the main program display area 106 are displayed above the detailed focus area 101 and the video area 103. If a user activates the down arrow button 84 while being presented with IPG configuration screen 320, then the user is presented once again with IPG configuration screen 300 (FIG. 12A).

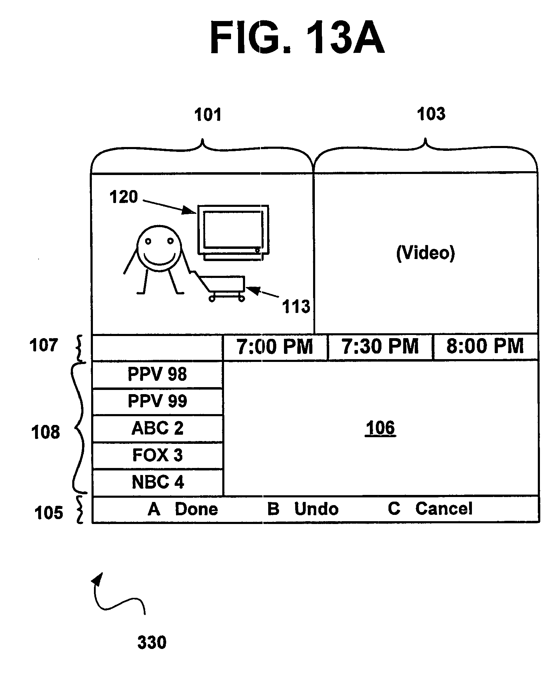

FIG. 13A depicts a non-limiting example of an IPG configuration screen 330 that is presented to a user who selects a cart icon 113 and a television icon 120 via IPG icon selection screen 130. Selection of the cart icon 113 in conjunction with the television icon 120 allows a user to change the location of the video area 103. A user may change the location of the video area 103 by activating an arrow button 83-86 (FIG. 2).

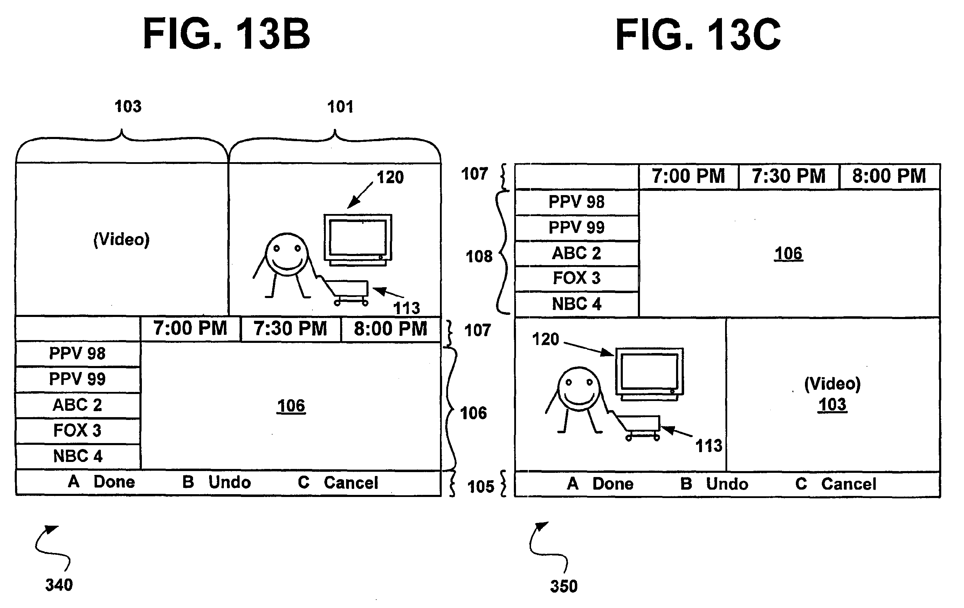

FIG. 13B depicts a non-limiting example of an IPG configuration screen 340 that is presented to the user after the user activates the left arrow button 85 (FIG. 2) while being presented with IPG configuration screen 330 (FIG. 13A). As a result of activating the left arrow button 85, the video area 103 is displayed to the left of the detailed focus area 101. By activating the right arrow button while being presented with IPC configuration screen 340, the user is presented once again with IPG configuration screen 330 (FIG. 13A).

FIG. 13C depicts a non-limiting example of an IPG configuration screen 350 that is presented to the user after the user activates the down arrow button 84 (FIG. 2) while being presented with IPG configuration screen 330 (FIG. 13A). As a result of activating the down arrow button 84, the video area 103 is displayed to the bottom of the main program display area 106. By activating the up arrow 83 while being presented with IPG configuration screen 350, the user is once again presented with IPG configuration screen 330 (FIG. 13A).

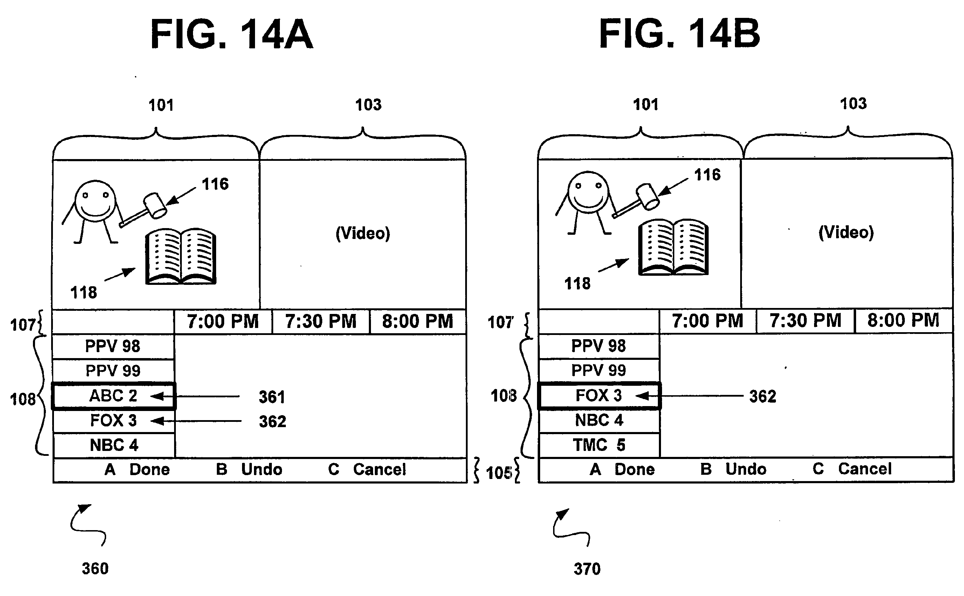

FIG. 14A depicts a non-limiting example of an IPG configuration screen 360 that is presented to a user who selects a mallet icon 116 and a book icon 118 via IPG icon selection screen 130. Selection of the mallet icon 116 in conjunction with the book icon 118 allows a user to delete channels listed in channel area 108. In one embodiment, a user can highlight a channel listing using the up or down arrow buttons 83 & 84 (FIG. 2) and then delete a channel listing by activating the select button 87 (FIG. 2). A user may restore the most recently deleted channel listing by activating the "B" button 89 (FIG. 2). A user may also restore all the deleted channel listings by pressing the "B" button 89 for a pre-determined length of time such as, for example, a few seconds.

FIG. 14B depicts a non-limiting example of an IPG configuration screen 370 that is presented to the user after the user activates the select button 87 (FIG. 2) while being presented with IPG configuration screen 360 (FIG. 14A). As a result of activating the select button 87, the highlighted channel in FIG. 14A is deleted and is replaced with the next channel in the sequence of channels. In this example, the ABC® channel 361 is deleted and is replaced with the FOX® channel 362.

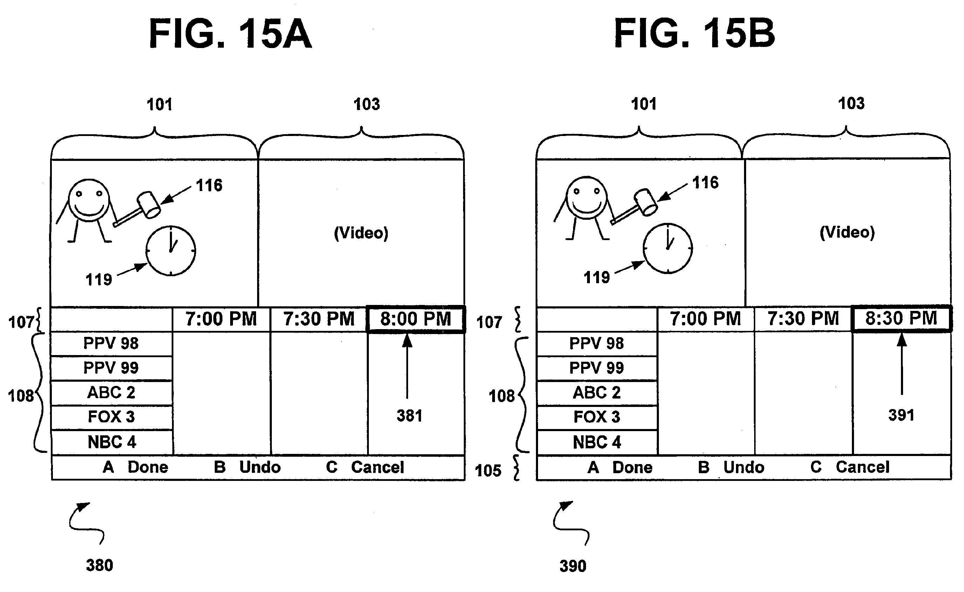

FIG. 15A depicts a non-limiting example of an IPG configuration screen 380 that is presented to a user who selects a mallet icon 116 and a clock icon 119 via IPG icon selection screen 130. Selection of the mallet icon 116 in conjunction with the clock icon 119 allows a user to delete time slots listed in time area 107. In one embodiment, a user can highlight a time listing using the left or right arrow buttons 85 & 86 (FIG. 2) and then delete a time listing by activating the select button 87 (FIG. 2). A user may restore the most recently deleted time listing by activating the "B" button 89 (FIG. 2). A user may also restore all the deleted time listings by pressing the "B" button 89 for a pre-determined length of time such as, for example, a few seconds.

FIG. 15B depicts a non-limiting example of an IPG configuration screen 390 that is presented to the user after the user activates the select button 87 (FIG. 2) while being presented with IPG configuration screen 380 (FIG. 15A). As a result of activating the select button 87, the highlighted time slot in FIG. 15A is deleted and is replaced with the next time slot in the sequence of time slots. In this example, the 8:00 p.m. time slot 381 is deleted and is replaced with the 8:30 p.m. time slot 391.

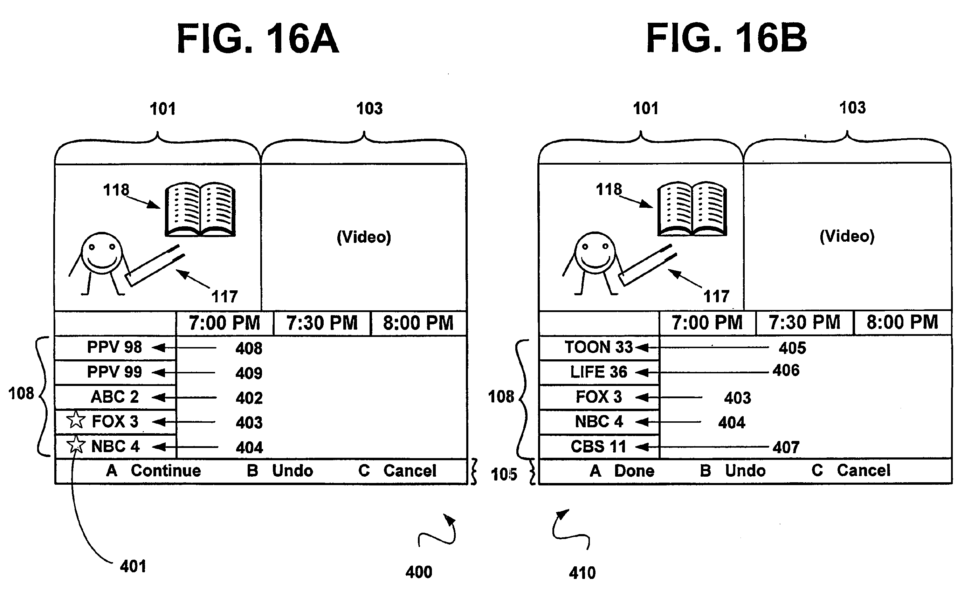

FIG. 16A depicts a non-limiting example of an IPG configuration screen 400 that is presented to a user who selects a tweezers icon 117 and a book icon 118 via IPG icon selection screen 130. Selection of the tweezers icon 117 in conjunction with the book icon 118 allows a user to select the channels that the user desires to be listed in channel area 108. In one embodiment, a user can highlight a channel listing using the up or down arrow buttons 83 & 84 (FIG. 2) and then select a channel listing by activating the select button 87 (FIG. 2). After the user selects a channel, a star symbol 401 is displayed next to it. A user may select multiple channels whereby each selected channel is identified with a star symbol 401. A user may undo a channel selection by activating the select button 87 while a channel identified with a star symbol 401 is highlighted. After a channel selection is undone, the star symbol 401 is no longer displayed next to it.

FIG. 16B depicts a non-limiting example of an IPG configuration screen 410 that is presented to the user after the user activates the "A" button 88 (FIG. 2) while being presented with IPG configuration screen 400 (FIG. 16A). As a result of activating the "A" button 88, the channels that were selected via IPG configuration screens 400 (FIG. 16A) become accessible via channel area 108. In this example, FOX®, NBC®, Toon®, Life®, and CBS® 403-407, were selected via IPG configuration screen 400, and are therefore included in channel area 108 (FIG. 16B). On the other hand, the PPV® channels 408 & 409 and the ABC® channel 402 (FIG. 16A), which were not selected via IPG configuration screen 400, are not included in the channel area 108 of IPG configuration screen 410.

In one embodiment, the functionality provided in connection with one icon may complement the functionality provided in connection with another icon. For example, after a user selects a category of channels pursuant to the functionality provided in connection with the glasses icon (e.g. via IPG configuration screen 280 shown in FIG. 11A), a user may then select individual channels within that category by using the functionality provided in connection with the tweezers icon (e.g. via IPG configuration screen 400 shown in FIG. 16A). In such an embodiment, only a subset of channels corresponding to a previously selected category is provided to a user who selects the tweezers icon. In an alternative embodiment, all channels would be provided to the user; however, channels corresponding to a previously selected category are identified as such using, for example, star symbols 401.

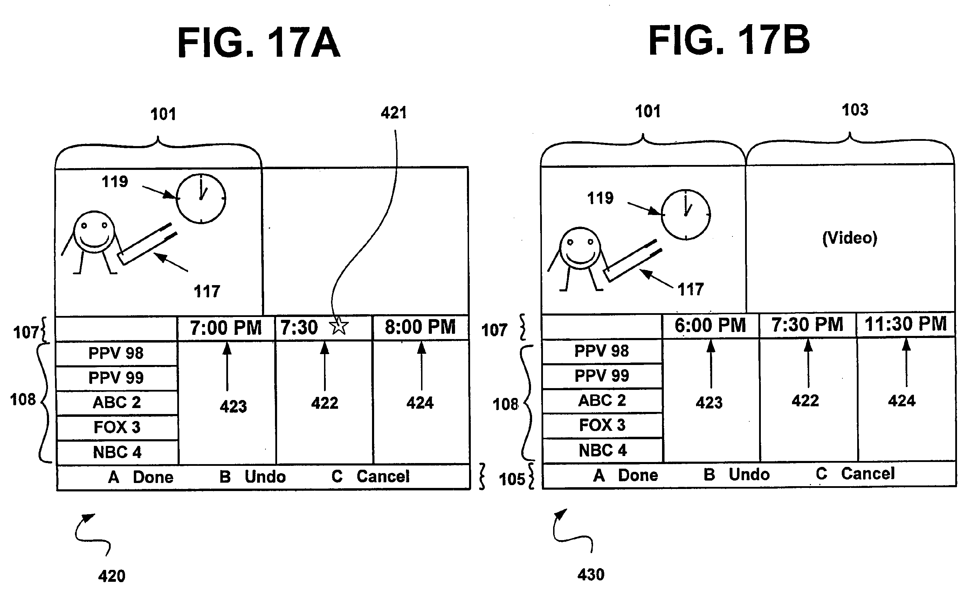

FIG. 17A depicts a non-limiting example of an IPG configuration screen 420 that is presented to a user who selects a tweezers icon 117 and a clock icon 119 via IPG icon selection screen 130. Selection of the tweezers icon 117 in conjunction with the clock icon 119 allows a user to select the times that the user desires to be listed in time area 107. In one embodiment, a user can highlight a time listing using the left or right arrow buttons 85 & 86 (FIG. 2) and then select a time listing by activating the select button 87 (FIG. 2). After the user selects a time listing, a star symbol 421 is displayed next to it.

FIG. 17B depicts a non-limiting example of an IPG configuration screen 430 that is presented to the user after the user activates the "A" button 88 (FIG. 2) while being presented with IPG configuration screen 420 (FIG. 17A). As a result of activating the "A" button 88, the times that were selected via IPG configuration screen 420 become accessible via time area 107. In this example, the 7:30 p.m. time slot 422, which was a selected time slot, is included in time area 107 (FIG. 17B). On the other hand, the 7:00 p.m. and the 8:00 p.m. time slots 423 & 424, which were not selected via IPG configuration screen 420, are not included in the time area 107 of IPG configuration screen 430. Time slots for 6:00 p.m. 423 and 11:30 p.m. 424 are presumed to have also been selected by the user.

FIG. 18A depicts a non-limiting example of an IPG configuration screen 440 that is presented to a user who selects a ruler icon 112 and a television icon 120 via IPG icon selection screen 130. Selection of the ruler icon 112 in conjunction with the television icon 120 allows a user to adjust the size of the video area 103. In one embodiment, a user can request an increase or decrease in the size of the video area 103 by activating the up arrow button 83 or the down arrow button 84 (FIG. 2), respectively. Each time that the user activates the down arrow button 84, the size of the video area 103 is reduced by a pre-determined increment. Similarly, each time that the user activates the up arrow 83, the size of the video area 103 is increased by a pre-determined increment. In one embodiment, the extent that the size of the video area is increased or decreased is proportional to the length of time that a designated remote control button is activated.

FIG. 18B depicts a non-limiting example of an IPG configuration screen 450 that is presented to the user after the user activates the up arrow 83 while being presented with IPG configuration screen 440 (FIG. 18A). As a result of activating the up arrow button 83, the size of the video area 103 is increased. Note that the relative size of video area 103 of IPG screen 450 is significantly larger than that of video area 103 of IPG screen 440. Also note that changing the size of the video area 103 results in a change in size for other elements. In this example, increasing the size of the video area 103 causes the sizes of the channel area 108 and the program display area 106 to decrease.

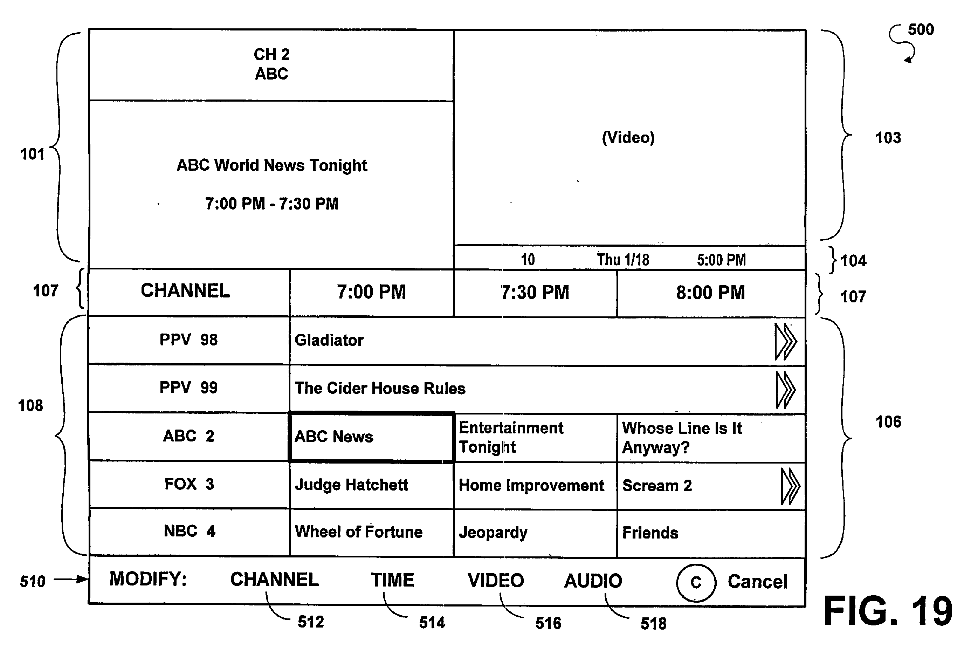

FIGS. 19-24 illustrate an alternative implementation to the IPG configuration screens illustrated in FIGS. 4-18B. FIG. 19 illustrates a non-limiting example of an IPG configuration screen 500 that may, in one implementation, be presented to a user who activates the C button 90 (FIG. 2) while being presented with the IPG screen 100 (FIG. 3). Menu 510 includes options 512, 514, 516, and 518 that may be used to access menus containing selections for changing channel, time, and video characteristics, respectively, of an IPG screen. A user may select a menu option by using one of the arrow keys 83-86 (FIG. 2) to highlight a desired option and by then using the select key 87 to activate the highlighted option. In an alternative embodiment, a user may select an option by using the number section 95 (FIG. 2) to enter a number that is displayed next to the desired option (not shown).

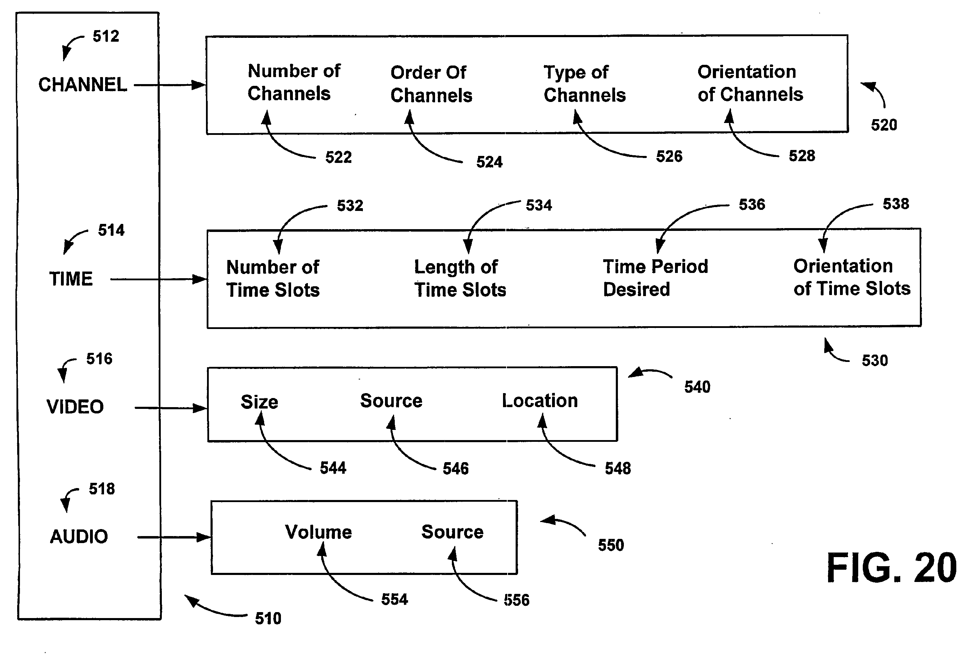

FIG. 20 is a flow chart depicting non-limiting examples of IPG configuration menus 520, 530, 540, and 550 that can be accessed by selecting options 512, 514, 516, and 518 respectively, from menu 510 (FIG. 19). Each of menus 520, 530, 540, and 550 may, in one embodiment, be displayed at the bottom of an IPG screen, such as, for example, IPG screen 500. Although, for illustration purposes, menu 510 is shown as having a vertical orientation, in a preferred embodiment menu 510 is horizontally oriented as shown in FIG. 19. Nevertheless, each of the menus shown in FIGS. 19-24 may be embodied in many different shapes and orientations. Possible menu shapes may include, for example, rectangular, circular, elliptical, square, triangular, polygonal, etc.

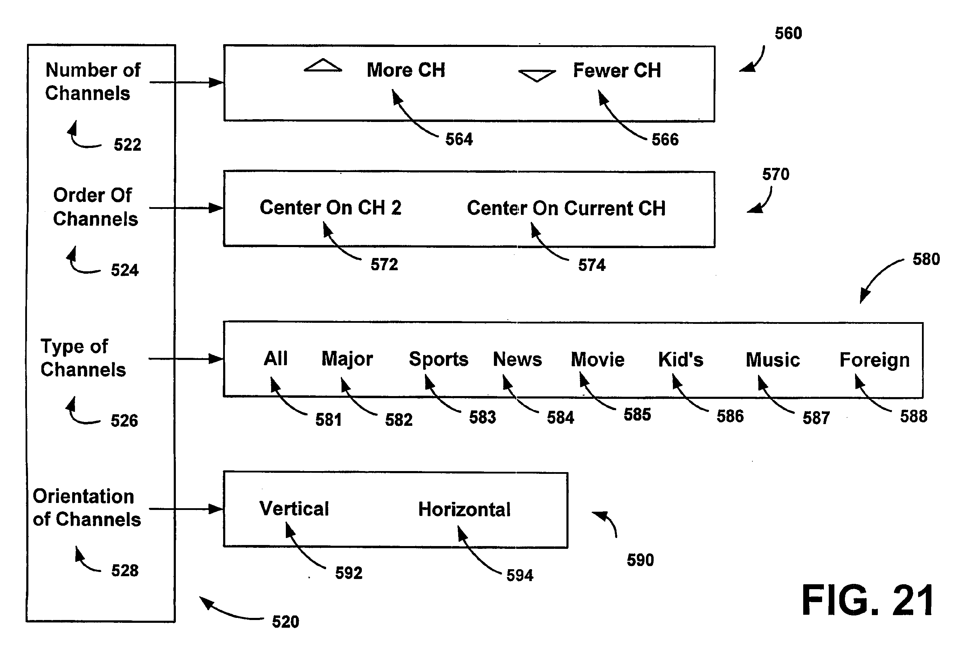

Menu 520 includes options 522, 524, 526, and 528 that can be used to access additional menus 560, 570, 580, and 590 (FIG. 21), respectively, containing selections for changing channel characteristics of an IPG screen. In this non-limiting example, the channel characteristics that can be changed via menu 520 include the number of channels displayed at any given time, the order in which the channels are displayed, the type of channels displayed, and the orientation of the channel axis.

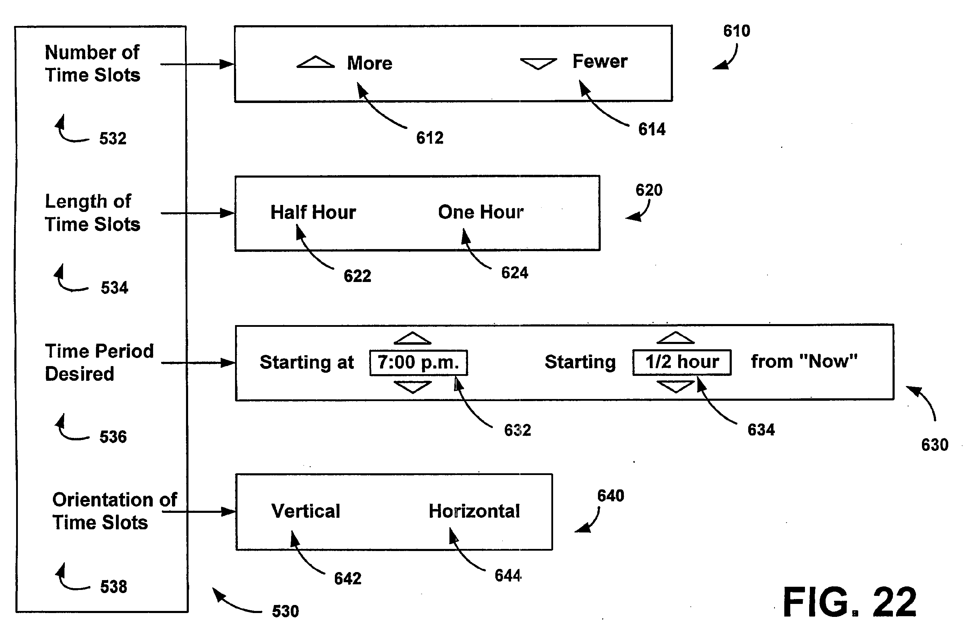

Menu 530 includes options 532, 534, 536, and 538 that can be used to access additional menus 610, 620, 630, and 640 (FIG. 22), respectively, containing selections for changing time listing characteristics of an IPG screen. The time listing characteristics that can be changed include, for example, the number of time listings displayed concurrently, the length of the time slots, the time coverage desired, and the orientation of the time listings.

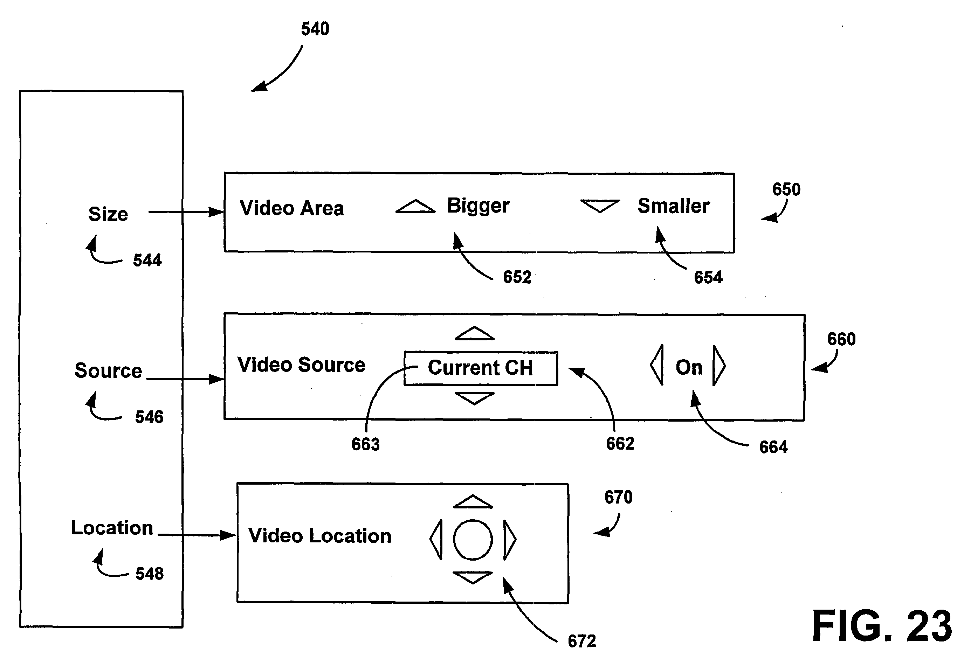

Menu 540 includes options 544, 546, and 548 that can be used to access menus 650, 660, and 670 (FIG. 23) containing selections for changing video characteristics of an IPG screen. The video characteristics that can be changed include, for example, the size of the video presentation area, the source of the video presentation, and the location of the video presentation area.

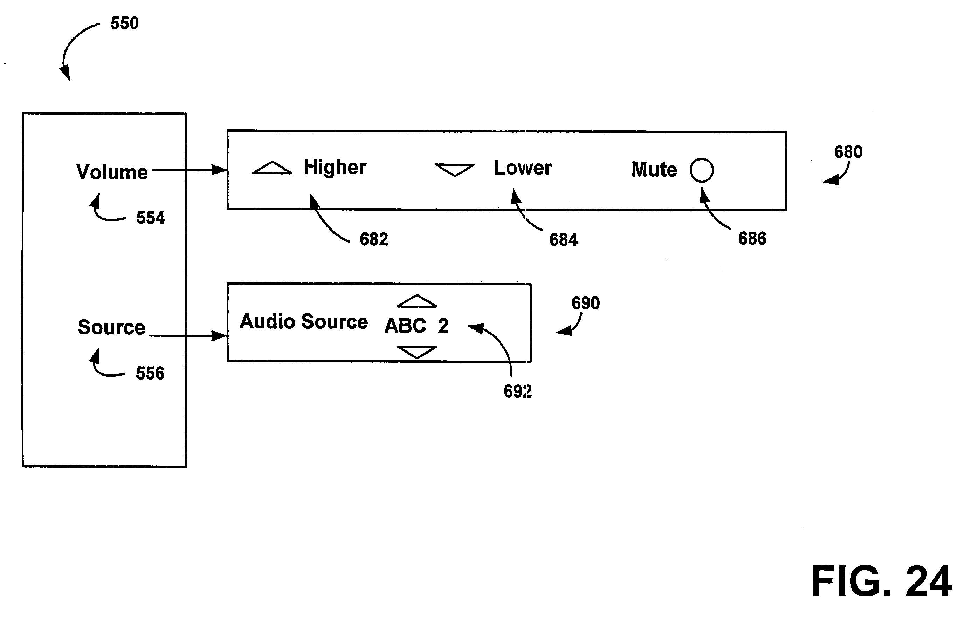

Menu 550 includes options 554 and 556 that can be used to access menus 680 and 690 (FIG. 24) containing selections for changing audio characteristics of an IPG screen. In this example, the audio characteristics that can be changed include the volume and the source of the audio signals that are presented in conjunction with an IPG screen.

Those skilled in the art will understand that the characteristics of an IPG screen that may be configurable in response to user input are not limited to those listed above. Such characteristics may include, for example, IPG text font and size, the amount and location of television program information, the color of various IPG components, etc.

FIG. 21 depicts non-limiting examples of channel configuration menus 560, 570, 580, and 590 that can be accessed by selecting options 522, 524, 526, and 528, respectively, from menu 520. Each of menus 560, 570, 580, and 590 may, in one embodiment, be displayed at the bottom of an IPG screen, such as, for example, IPG screen 500. Menu 560 includes a "More CH" option 564 and a "Fewer CH" option 566 that can be respectively selected to increase or decrease the number of television channels displayed concurrently in an IPG screen. In this example, a user can select options 564 and 566 by activating the up arrow button 83 and the down arrow button 84, respectively, on the RCD 80 (FIG. 2). As a non-limiting example, option 564 may be used to increase the number of concurrent channel listings to eleven as depicted by channel area 108 in FIG. 7C, whereas option 566 may be used to decrease the number of listings to only one, as depicted by channel area 108 in FIG. 7B. In one embodiment, an increase or decrease in the number of concurrent channel listings results in an adjustment to the relative size of video area 103 as shown in FIGS. 7B & 7C.

Menu 570 includes options 572 and 574 for determining the channel listings that are initially displayed in an IPG screen. The "Center On CH 2" option 572 may be selected to designate channel 2 as the highlighted channel that is initially displayed in the center of a channel area, and the "Center On Current CH" option 574 may be selected to designate a current channel as the highlighted channel that is initially displayed in the center of a channel area. A current channel is defined as a channel that a user was tuned to immediately prior to accessing an IPG screen. The channels displayed above and below the highlighted channel continue to be listed in chronological order.

Menu 580 includes options for determining the type of channels to be displayed in an IPG screen. In this non-limiting example, the type of channel options include "all" 581, "major" 582, "sports" 583, "news" 584, "movie" 585, "kid's" 586, "music" 587, and "foreign" 588. Channels that do not correspond to a type of channel selected via menu 580 will not be listed in an IPG screen. For example, if a user selects the sports option 583, then only channels that are dedicated to broadcasting sports events, such as, for example, ESPN® or Fox Sports®, are listed in an IPG screen. In an alternative embodiment, a user is also provided with the option (not shown) of selecting the individual channels that the user desires to be listed in an IPG screen. The user may identify an individual channel by entering the channel number via the number section 95 (FIG. 2) and by then activating the select button 87.

Menu 590 includes options for determining the orientation of the channel listings in an IPG screen. A user may select the "vertical" option 592 or the "horizontal" option 594 in order to request a vertical or horizontal orientation, respectively, for the channel listings in an IPG screen. As the orientation of the channel listings changes, so does the orientation of the time listings. For example, if the orientation of the channel listing become horizontal, then the orientation of the time listings becomes vertical, and vice versa. As non-limiting examples, a vertical channel listing is depicted in channel area 108 of FIG. 12A, whereas a horizontal channel listing is depicted in time area 107 of FIG. 12B.

FIG. 22 depicts non-limiting examples of menus 610, 620, 630, and 640 that can be accessed by selecting options 532, 534, 536, and 538, respectively, from menu 530. Menus 610, 620, 630, and 640 contain selections for changing time characteristics of an IPG screen. In this non-limiting example, the time characteristics that can be changed include the number of time slots displayed at any given time, the length of the time slots, the total time period displayed at any given time, and the orientation of the time axis.

Menu 610 includes a "more" option 612 and a "fewer" option 614 that may be respectively selected to increase or decrease the number of time slots displayed concurrently in an IPG screen. A user can select options 612 and 614 by activating the up arrow button 83 and the down arrow button 84, respectively, on the RCD 80 (FIG. 2). As a non-limiting example, option 612 may be used to increase the number of time slots to four as depicted by time area 107 in FIG. 8C, whereas option 614 may be used to decrease the number of time listings to two as depicted by time area 107 in FIG. 8B.

The options 622 & 624 in menu 620 may be used to determine the time coverage of each time slot shown in an IPG screen. According to example menu 620, a user can select coverage of either half an hour 622 or one hour 624. Examples of time slots having half-hour and one hour coverage are depicted in time areas 107 of FIGS. 8A and 8D respectively. In one implementation, if a time slot coverage of "one hour" 624 is selected, then only programs that have an allotted time of one hour or more (including respective advertisement time) are identified by the IPG. In another implementation, a user is also provided with the option of selecting other time slot coverage periods such as, for example, a two hour coverage period. An example of time slots having two hour time spans is depicted in time area 107 of FIG. 8E.

Menu 630 contains time period selection fields 632 and 634 that can be used to determine the time period that is initially listed in an IPG screen. A user may highlight a time field using the left and right arrow buttons 85 & 86 (FIG. 2), and may then use the up and down arrow buttons 83 & 84 (FIG. 2) to designate the start of the time period that is to be initially listed in an IPG screen. Field 632 may be used to designate an absolute start time such as, for example, 9:00 p.m., whereas field 634 may be used to designate a start time that is relative to the time that an IPG screen is requested by the user. Examples of different IPG start times are depicted in time areas 107 of FIGS. 10A & 10B.

Menu 640 includes options 642 & 644 for determining the orientation of the time listings in an IPG screen. A user may select the "vertical" option 642 or the "horizontal" option 644 in order to request a vertical or horizontal orientation, respectively. As the orientation of the time listings changes, so does the orientation of the channel listings. For example, if the orientation of the time listings become vertical, then the orientation of the channel listings becomes horizontal, and vice versa. As non-limiting examples, a vertical time listing is depicted in channel area 108 of FIG. 12B, whereas a horizontal time listing is depicted in time area 107 of FIG. 12A.

FIG. 23 depicts non-limiting examples of IPG video configuration menus 650, 660, and 670 that can be accessed by selecting options 544, 546, and 548, respectively, from menu 540. Each of menus 650, 660, and 670 may, in one embodiment, be displayed at the bottom of an IPG screen, such as, for example, IPG screen 500 (FIG. 19). Menu 650 includes a "bigger" option 652 and a "smaller" option 654 that can be respectively selected to increase or decrease the size of a video display screen that is displayed within an IPG screen. In this example, a user can select options 652 and 654 by activating the up arrow button 83 and the down arrow button 84, respectively, on the RCD 80 (FIG. 2). As the size of a video area is increased, the size of other elements displayed in an IPG screen may decrease. For example, as the relative size of video area 103 of FIG. 18A is increased to the relative size of video area 103 of FIG. 18B, the relative size of channel area 108 of FIG. 18A is decreased to the relative size of channel area 108 of FIG. 18B. Note of course that these figures are not drawn to scale.

Menu 660 includes a video source selection field 662 and a video area activation filed 664. The video source selection field can be used to determine the television channel that is to be displayed via an IPG video area. A user can activate the up and down arrow buttons 83 & 84 in order to browse through the available channel selections. In this example, channel selections include a "Current CH" selection 663 that may be used to cause the IPG video area to display the same channel that is being presented at the time that an IPG is requested. Once a desired channel selection is displayed in the selection field 662, a user can activate the select button 87 in order to designate the channel as the video source for the IPG video area. In an alternative embodiment, a user can designate a channel as the video source for the IPG video area by using the number section 95 (FIG. 2) to enter a number that corresponds to the desired channel. The video area activation field 664 can be used to activate and de-activate the video area. In this example the user can use the left and right arrow buttons 85 & 86 to toggle between "on" and "off" states. If the user selects an "off" state, then the user will not be provided with a video stream in conjunction with IPG screens.

Menu 670 includes a video location selection icon 672 informing the user that the arrow buttons 83-86 (FIG.2) may be used to relocate an IPG video area. A user can activate an arrow button in order to cause the video area to move in a corresponding direction. In one embodiment, the video area may only be re-located to a few pre-determined locations. In an alternative embodiment, the video area may be re-located to any location on an IPG screen. FIGS. 13A, 13B, & 13C depict non-limiting examples of locations that a video area 103 may have relative to other elements in an IPG screen.

FIG. 24 depicts non-limiting examples of IPG audio configuration menus 680 and 690 that can be accessed by selecting options 554 and 556, respectively, from menu 550. Each of menus 680 and 690 may, in one embodiment, be displayed at the bottom of an IPG screen, such as, for example, IPG screen 500. Menu 680 includes a "higher" option 682 and a "lower" option 684 that can be respectively selected to increase or decrease the volume of audio signals that are presented in conjunction with in an IPG screen. In this example, a user can select options 682 and 684 by activating the up arrow button 83 and the down arrow button 84, respectively, on the RCD 80 (FIG. 2). The user may also select the "mute" option 686 in order not to receive audio signals in conjunction with an IPG screen. The mute option 686 may be selected, for example, by activating the mute button 96 on the RCD 80.

Menu 690 includes an audio source selection field 692 that can be used to determine the source of audio signals that are presented in conjunction with an IPG screen. A user can activate the up and down arrow buttons 83 & 84 in order to browse through the available audio sources. Once a desired audio source is identified in the selection field 692, a user can activate the select button 87 in order to designate the audio source as the audio source for providing audio signals in conjunction with an IPG screen. In an alternative embodiment, a user can select an audio source by using the number section 95 (FIG. 2) to enter a number that corresponds to the television channel that is to provide an audio source.

After the user configures an IPG, and when the user subsequently invokes an IPG session, the user is presented with an IPG that is configured in accordance with previously defined user specifications that are stored in non-volatile memory. For example, if the user configures the IPG in a certain manner on a Monday and then invokes an IPG session on the following day, Tuesday, by activating, for example, the guide key 91, then the user is provided with the IPG configuration that was specified by the user on Monday.

In one embodiment, when a user initiates an IPG session, the user is presented with an IPG configuration that is associated with the user. The IPG configuration may be associated with the user via, for example, a personal identification number (PIN). The PIN may be entered by the user via the number section 95 (FIG. 2) when the user is presented with a PIN entry screen (not shown). In this manner, each user in a certain household may create or specify an IPG configuration that can be presented to such user at a subsequent time.

In another embodiment, an initial IPG screen includes a list of IPG configurations (not shown) on a portion of the IPG screen so that the user may interactively select a desired or preferred IPG configuration. The IPG configurations listed may be configurations that are predetermined by a television service provider and/or configurations that were previously created by the user.

In an alternate embodiment, the user selects and saves a mode from one or more configurable IPG modes (not shown). Each mode results in the presentation of a initial IPG screen having a certain configuration. An initial IPG screen is one that is presented to a user when the user invokes an IPG session by, for example, activating the guide key 91. A first configurable mode displays, responsive to a first user input, an initial IPG screen that lists a multiplicity of IPG configurations in which the user provides secondary input to select a desired configuration. A second configurable mode displays, responsive to a first user input, an initial IPG screen corresponding to the last IPG presentation screen effective at the time of exiting the last IPG display session. A third configurable mode displays, responsive to a first user input, an initial IPG screen corresponding to a preferred IPG screen configuration selected by the user during an interactive configuration session.

In yet another alternative embodiment, a user is provided with a configuration screen that allows the user to determine visual characteristics of an IPG screen. These configurable visual characteristics include font type, font size, font style, foreground color, background color, foreground texture, background texture, border type, border color, border thickness, border continuity, transition between screens, among others.

It should be emphasized that the above-described embodiments of the present invention, particularly any "preferred embodiments", are merely possible examples, among others, of the implementations, setting forth a clear understanding of the principles of the invention. Many variations and modifications may be made to the above-described embodiments of the invention without departing from the scope of the invention as defined by the following claims.

## Claims

1. A system for providing interactive media services comprising:
memory for storing interactive program guide (IPG) configuration data that is used to determine an IPG channel listing characteristic where the channel listing characteristic comprises a predetermined number of channels presented concurrently; and
logic-circuitry configured to modify the IPG configuration data in response to a first user input requesting a change in the IPG channel listing characteristic,
wherein the IPG channel listing characteristic is represented by an object indicia presented to the user and an action for reconfiguring the IPG channel listing characteristic is represented by a tool indicia presented to the user such that a first user input of selecting the object indicia and the action indicia modifies the IPG channel listing characteristic.

2. The system of claim 1, where an IPG channel listing that is configured in accordance with the first user input is presented to a user in response to receiving a second user input.

3. The system of claim 1, where the channel listing characteristic further comprises elements from a group consisting of:
type of channels presented, order in which channel listings are presented, identity of channels presented, identity of an initially highlighted channel, orientation of channel listings, location of channel listings.

4. The system of claim 1, where an IPG channel listing that is configured in accordance with the first user input is presented to a user via a display device.

5. The system of claim 1, where the first user input is provided via a remote control device.

6. The system of claim 1, where the system is a client device.

7. The system of claim 6, where the client device is a digital home communication terminal (DHCT).

8. A method for configuring a user interface, comprising:
receiving a first user input requesting a change in an interactive program guide (IPG) channel listing characteristic where the channel listing characteristic comprises a predetermined number of channels presented concurrently; and
modifying IPG configuration data stored in memory in response to receiving the first user input, where the IPG configuration data is used to determine the IPG channel listing characteristic,
wherein the IPG channel listing characteristic is represented by an object indicia presented to the user and an action for reconfiguring the IPG channel listing characteristic is represented by a tool indicia presented to the user such that a first user input of selecting the object indicia and the action indicia modifies the IPG channel listing characteristic.

9. The method of claim 8, where the first user input is provided via a remote control device.

10. The method of claim 8, where the IPG channel listing is presented to a user in response to receiving a second user input.

11. The method of claim 10, where the second user input is received while the user is not being presented with an IPG channel listing.

12. The method of claim 8, where the IPG channel listing is presented to a user via a display device.

13. The method of claim 8, where the channel listing characteristic further comprises elements from a group consisting of:
type of channels presented, order in which channel listings are presented, identity of channels presented, identity of an initially highlighted channel, orientation of channel listings, location of channel listings.

## Patentansprüche

1. System zum Bereitstellen von interaktiven Mediendiensten, mit:
einem Speicher zum Speichern von IPG-Konfigurationsdaten (IPG: interactive program guide; interaktiver Programmführer), die zum Festlegen einer IPG-Kanalverzeichnis-Kennziffer verwendet werden, wobei die IPG-Kanalverzeichnis-Kennziffer eine vorgegebene Anzahl von aktuell bereitgestellten Kanälen umfasst; und
einer Logikschaltung, die so konfiguriert ist, dass sie die IPG-Konfigurationsdaten in Reaktion auf eine erste Nutzer-Eingabe modifiziert, die eine Änderung der IPG-Kanalverzeichnis-Kennziffer anfordert,
wobei die IPG-Kanalverzeichnis-Kennziffer durch einen Objektindex dargestellt wird, der für den Nutzer bereitgestellt wird, und eine Aktion zum Rekonfigurieren der IPG-Kanalverzeichnis-Kennziffer durch einen Tool-Index dargestellt wird, der für den Nutzer bereitgestellt wird, sodass eine erste Nutzer-Eingabe zum Auswählen des Objektindex und des Aktionsindex die IPG-Kanalverzeichnis-Kennziffer modifiziert.

2. System nach Anspruch 1, **dadurch gekennzeichnet, dass** ein IPG-Kanalverzeichnis, das entsprechend der ersten Nutzer-Eingabe konfiguriert worden ist, in Reaktion auf den Empfang einer zweiten Nutzer-Eingabe für einen Nutzer bereitgestellt wird.

3. System nach Anspruch 1, **dadurch gekennzeichnet, dass** die Kanalverzeichnis-Kennziffer weiterhin Elemente aus einer Gruppe aufweist, die aus Folgendem besteht: Typ von bereitgestellten Kanälen; Reihenfolge, in der Kanalverzeichnisse bereitgestellt werden; Identität von bereitgestellten Kanälen; Identität eines zuerst markierten Kanals; Orientierung von Kanalverzeichnissen und Lage von Kanalverzeichnissen.

4. System nach Anspruch 1, **dadurch gekennzeichnet, dass** ein IPG-Kanalverzeichnis, das entsprechend der ersten Nutzer-Eingabe konfiguriert worden ist, über eine Anzeigevorrichtung für einen Nutzer bereitgestellt wird.

5. System nach Anspruch 1, **dadurch gekennzeichnet, dass** die erste Nutzer-Eingabe über eine Fernbedienungsvorrichtung bereitgestellt wird.

6. System nach Anspruch 1, **dadurch gekennzeichnet, dass** das System eine Client-Vorrichtung ist.

7. System nach Anspruch 6, **dadurch gekennzeichnet, dass** die Client-Vorrichtung ein digitales Heimkommunikations-Endgerät (digital home communication terminal; DHCT) ist.

8. Verfahren zum Konfigurieren einer Nutzerschnittstelle, mit den folgenden Schritten:
Empfangen einer ersten Nutzer-Eingabe, die eine Änderung einer IPG-Kanalverzeichnis-Kennziffer anfordert, wobei die IPG-Kanalverzeichnis-Kennziffer eine vorgegebene Anzahl von aktuell bereitgestellten Kanälen umfasst; und
Modifizieren von IPG-Konfigurationsdaten, die in einem Speicher gespeichert sind, in Reaktion auf das Empfangen der ersten Nutzer-Eingabe, wobei die IPG-Konfigurationsdaten zum Festlegen der IPG-Kanalverzeichnis-Kennziffer verwendet werden,
wobei die IPG-Kanalverzeichnis-Kennziffer durch einen Objektindex dargestellt wird, der für den Nutzer bereitgestellt wird, und eine Aktion zum Rekonfigurieren der IPG-Kanalverzeichnis-Kennziffer durch einen Tool-Index dargestellt wird, der für den Nutzer bereitgestellt wird, sodass eine erste Nutzer-Eingabe zum Auswählen des Objektindex und des Aktionsindex die IPG-Kanalverzeichnis-Kennziffer modifiziert.

9. Verfahren nach Anspruch 8, **dadurch gekennzeichnet, dass** die erste Nutzer-Eingabe über eine Fernbedienungsvorrichtung bereitgestellt wird.

10. Verfahren nach Anspruch 8, **dadurch gekennzeichnet, dass** das IPG-Kanalverzeichnis in Reaktion auf den Empfang einer zweiten Nutzer-Eingabe für einen Nutzer bereitgestellt wird.

11. Verfahren nach Anspruch 10, **dadurch gekennzeichnet, dass** die zweite Nutzer-Eingabe empfangen wird, obwohl für den Nutzer kein IPG-Kanalverzeichnis bereitgestellt wird.

12. Verfahren nach Anspruch 8, **dadurch gekennzeichnet, dass** das IPG-Kanalverzeichnis über eine Anzeigevorrichtung für einen Nutzer bereitgestellt wird.

13. Verfahren nach Anspruch 8, **dadurch gekennzeichnet, dass** die Kanalverzeichnis-Kennziffer weiterhin Elemente aus einer Gruppe aufweist, die aus Folgendem besteht: Typ von bereitgestellten Kanälen; Reihenfolge, in der Kanalverzeichnisse bereitgestellt werden; Identität von bereitgestellten Kanälen; Identität eines zuerst markierten Kanals; Orientierung von Kanalverzeichnissen und Lage von Kanalverzeichnissen.

## Revendications

1. Système pour fournir des services média interactifs comprenant :
une mémoire pour stocker des données de configuration de guide de programmes interactif (IPG) qui sont utilisées pour déterminer une caractéristique de listage de canaux IPG où la caractéristique de listage de canaux comprend un nombre prédéterminé de canaux présentés simultanément ; et
des circuits logiques configurés pour modifier les données de configuration IPG en réponse à une première entrée d'un utilisateur demandant un changement de la caractéristique de listage de canaux IPG,
dans lequel la caractéristique de listage de canaux IPG est représentée par un signe objet présenté à l'utilisateur et une action de reconfiguration de la caractéristique de listage de canaux IPG est représentée par un signe outil présenté à l'utilisateur de sorte qu'une première entrée d'un utilisateur pour une sélection du signe objet et du signe action modifie la caractéristique de listage de canaux IPG.

2. Système selon la revendication 1, dans lequel un listage de canaux IPG qui est configuré conformément à la première entrée d'un utilisateur est présenté à un utilisateur en réponse à la réception d'une deuxième entrée d'un utilisateur.

3. Système selon la revendication 1, dans lequel la caractéristique de listage de canaux comprend en outre des éléments d'un groupe consistant en :
le type de canaux présentés, l'ordre dans lequel les listages de canaux sont présentés, l'identité des canaux présentés, l'identité d'un canal initialement mis en surbrillance, l'orientation des listages de canaux, l'emplacement des listages de canaux.

4. Système selon la revendication 1, dans lequel un listage de canaux IPG qui est configuré conformément à la première entrée d'un utilisateur est présenté à un utilisateur par l'intermédiaire d'un dispositif d'affichage.

5. Système selon la revendication 1, dans lequel la première entrée d'un utilisateur est fournie par l'intermédiaire d'un dispositif de commande à distance.

6. Système selon la revendication 1, dans lequel le système est un dispositif client.

7. Système selon la revendication 6, dans lequel le dispositif client est un terminal de communication domestique numérique (DHCT).

8. Procédé de configuration d'une interface utilisateur, comprenant :
la réception d'une première entrée d'un utilisateur demandant un changement d'une caractéristique de listage de canaux de guide de programmes interactif (IPG) où la caractéristique de listage de canaux comprend un nombre prédéterminé de canaux présentés simultanément ; et
la modification des données de configuration IPG stockées dans une mémoire en réponse à la réception de la première entrée d'un utilisateur, où les données de configuration IPG sont utilisées pour déterminer la caractéristique de listage de canaux IPG,
dans lequel la caractéristique de listage de canaux IPG est représentée par un signe objet présenté à l'utilisateur et une action de reconfiguration de la caractéristique de listage de canaux IPG est représentée par un signe outil présenté à l'utilisateur de sorte qu'une première entrée d'un utilisateur pour une sélection du signe objet et du signe action modifie la caractéristique de listage de canaux IPG.

9. Procédé selon la revendication 8, dans lequel la première entrée d'un utilisateur est fournie par l'intermédiaire d'un dispositif de commande à distance.

10. Procédé selon la revendication 8, dans lequel le listage de canaux IPG est présenté à un utilisateur en réponse à la réception d'une deuxième entrée d'un utilisateur.

11. Procédé selon la revendication 10, dans lequel la deuxième entrée d'un utilisateur est reçue alors que l'utilisateur ne se voit pas présenter un listage de canaux IPG.

12. Procédé selon la revendication 8, dans lequel le listage de canaux IPG est présenté à un utilisateur par l'intermédiaire d'un dispositif d'affichage.

13. Procédé selon la revendication 8, dans lequel la caractéristique de listage de canaux comprend en outre des éléments d'un groupe consistant en :
le type de canaux présentés, l'ordre dans lequel les listages de canaux sont présentés, l'identité des canaux présentés, l'identité d'un canal initialement mis en surbrillance, l'orientation des listages de canaux, l'emplacement des listages de canaux.
